(19) Europäisches Patentamt / European Patent Office / Office européen des brevets

(11) **EP 4 456 572 A1**

(12) **EUROPEAN PATENT APPLICATION**
published in accordance with Art. 153(4) EPC

(43) Date of publication:
**30.10.2024 Bulletin 2024/44**

(21) Application number: **22920103.3**

(22) Date of filing: **30.12.2022**

(51) International Patent Classification (IPC):
**H04W 4/029** (2018.01)

(52) Cooperative Patent Classification (CPC):
**H04W 4/029; H04W 8/08; H04W 12/104; H04W 24/08**

(86) International application number:
**PCT/CN2022/143865**

(87) International publication number:
**WO 2023/134473 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.01.2022 CN 202210045268**

(71) Applicant: **Huawei Technologies Co., Ltd.**
**Shenzhen, Guangdong 518129 (CN)**

(72) Inventors:
• **SUN, Li**
**Shenzhen, Guangdong 518129 (CN)**
• **LIU, Peng**
**Shenzhen, Guangdong 518129 (CN)**
• **WANG, Yuwei**
**Shenzhen, Guangdong 518129 (CN)**

(74) Representative: **Maiwald GmbH**
**Engineering**
**Elisenhof**
**Elisenstrasse 3**
**80335 München (DE)**

(54) **METHOD AND APPARATUS FOR TRANSMITTING RANGING SIGNAL IN UWB, AND READABLE STORAGE MEDIUM**

(57) This application relates to the field of wireless communication, and in particular, to a method for transmitting a ranging signal in a UWB, an apparatus, and a readable storage medium, and is applied to a wireless local area network supporting the 802.15.4z standard. The method includes: a first device constructs a ranging signal waveform through time reversal by using a channel impulse response of a channel between the first device and a second device or a received signal sent by the second device, to implement matching between a ranging signal and the channel; and the second device completes ToF measurement based on a received signal by using a correlation operation, and determines, through sampling, determining, and a correlation operation, whether a ranging process is interfered with, to implement integrity protection for the ranging signal. According to embodiments of this application, a receive end can have a capability of detecting whether a ranging process is interfered with, thereby ensuring integrity of a ranging signal without compromising ranging performance of a system.

FIG. 3

## Description

This application claims priority to Chinese Patent Application No. 202210045268.1, filed with the China National Intellectual Property Administration on January 15, 2022 and entitled "METHOD FOR TRANSMITTING RANGING SIGNAL IN UWB, APPARATUS, AND READABLE STORAGE MEDIUM", which is incorporated herein by reference in its entirety.

## TECHNICAL FIELD

This application relates to the field of wireless communication technologies, and in particular, to a method for transmitting a ranging signal in an ultra-wideband (ultra-wideband, UWB), an apparatus, and a readable storage medium.

## BACKGROUND

With the rapid development of mobile communication and Internet technologies, people have an increasing demand for location services. Ranging and positioning technologies are important technologies in the field of communication perception, and receive great attention from international standard organizations (such as the institute of electrical and electronics engineers (institute of electrical and electronics engineers, IEEE)). For example, the IEEE 802.15.4z (also referred to as impulse radio (impulse radio, IR) ultra-wideband, namely, IR-UWB) standard aims to standardize a ranging communication process, to determine a location of a device through secure ranging and ranging result exchanging. Specifically, two communication parties know a distance between the two devices by sending a ranging sequence, to perform high-precision location estimation. This technology is greatly demanded and applied in aspects such as personnel positioning in a factory, goods positioning in logistics and warehousing, and intelligent sensing of an automobile door lock. The rapid increase of positioning and ranging demands is accompanied with a security problem.

To resolve a security problem in ranging and positioning processes, the IEEE 802.15.4z standard proposes to encrypt a ranging sequence. This manner is effective to defend against an early detect/late commit (early detect/late commit, ED/LC) attack (attack). However, for other types of distance-reduction attacks (distance-reduction attack), such as Cicada, Cicada++, and GhostPeak, the manner of encrypting a ranging sequence cannot ensure security. The distance-reduction attack means that an interference signal is used to enable signal time of arrival estimated by a device receiving a ranging signal to be earlier than actual time, and consequently when an actual distance is long, two ranging parties mistakenly consider that a distance is short. In other words, the existing IEEE 802.15.4z standard provides only a confidentiality protection mechanism for a ranging signal, but does not provide integrity protection (integrity may be understood as preventing tampering of the ranging signal). Therefore, how to perform integrity protection on the ranging signal has not yet been resolved.

## SUMMARY

Embodiments of this application provide a method for transmitting a ranging signal in a UWB, an apparatus, and a readable storage medium, so that a receive end can have a capability of detecting whether a ranging process is interfered with, thereby ensuring integrity of a ranging signal without compromising ranging performance of a system.

The following describes this application from different aspects. It should be understood that mutual reference may be made to the following implementations and beneficial effects of the different aspects.

In this application, a first device and a second device may be different roles played by a same device at different moments. That is, at a moment, the first device is a transmit end and performs an operation of the transmit end; however, at another moment, the first device may be a receive end and perform an operation of the receive end. The second device is similar to the first device. That is, at a moment, the second device is a transmit end and performs an operation of the transmit end; however, at another moment, the second device may be a receive end and perform an operation of the receive end. The following provides descriptions by using an example in which the first device performs an operation of a transmit end and the second device performs an operation of a receive end.

According to a first aspect, this application provides a method for transmitting a ranging signal in an ultra-wideband. The method includes: a first device receives a first signal from a second device, and preprocesses the first signal to obtain a second signal, where the preprocessing is channel estimation or power normalization; the first device generates a first ranging signal based on at least the second signal, where the first ranging signal meets a signal obtained after convolution processing is performed on an original ranging signal and a signal obtained after time reversal is or time reversal and conjugation processing are performed on the second signal, or the first ranging signal meets a signal obtained after time reversal is or time reversal and conjugation processing are performed on the second signal; and the first device sends at least a part of the first ranging signal, where at least the part of the first ranging signal supports an integrity protection function and a ranging function.

In this solution, the first device preprocesses the signal from the second device, and then constructs a new physical layer ranging signal through time reversal and conjugation, where the signal has the integrity protection function, so that a receive end can have a capability of detecting whether a ranging process is interfered with, thereby ensuring integrity of the ranging signal without losing ranging performance of a system.

With reference to the first aspect, in a possible implementation, the first signal includes pilot information such as a preamble, the preprocessing is channel estimation, and the second signal is a first channel impulse response from the second device to the first device. That is, that the first device preprocesses the first signal to obtain a second signal includes: the first device performs channel estimation by using the pilot information included in the first signal, to obtain the first channel impulse response from the second device to the first device. That the first device generates a first ranging signal based on the second signal includes: the first device obtains a second channel impulse response after performing first processing on the first channel impulse response (the second signal), where the first processing includes time reversal or time reversal and conjugation processing; and the first device obtains the first ranging signal after performing convolution processing based on the second channel impulse response and the original ranging signal.

Optionally, that the first device obtains the first ranging signal after performing convolution processing based on the second channel impulse response and the original ranging signal includes: obtaining the first ranging signal after performing convolution processing on the original ranging signal and a response obtained after normalization processing is performed on the second channel impulse response.

In this solution, the first device constructs a ranging signal waveform through time reversal by using a channel impulse response of a channel between the first device and the second device, to implement matching between the ranging signal and the channel, so that a receive end has a capability of detecting whether a ranging process is interfered with, thereby ensuring integrity of the ranging signal without compromising ranging performance of a system.

With reference to the first aspect, in a possible implementation, the first signal is obtained after the original ranging signal is transmitted through a radio channel, and the preprocessing is power normalization. That is, that the first device preprocesses the first signal to obtain a second signal includes: the first device performs power normalization on the first signal to obtain the second signal. That the first device generates a first ranging signal based on the second signal includes: the first device obtains the first ranging signal after performing time reversal or time reversal and conjugation processing on the second signal.

In this solution, after performing power normalization on the received first signal, the first device directly performs reversal and conjugation, to obtain a signal (the first ranging signal) that has the integrity protection and ranging functions, and sends the signal, so that a receive end can detect whether a ranging process is interfered with, thereby providing integrity protection for the ranging signal without compromising ranging performance of a system. In addition, in this solution, channel estimation is not required, so that ranging performance is not affected by a channel estimation error.

With reference to the first aspect, in a possible implementation, a length of at least the part of the first ranging signal is equal to a length of the original ranging signal. Alternatively, a length of at least the part of the first ranging signal is greater than a length of the original ranging signal.

With reference to the first aspect, in a possible implementation, at least the part of the first ranging signal is carried in a ranging radio frame.

With reference to the first aspect, in a possible implementation, before that the first device sends at least a part of the first ranging signal, the method further includes: the first device receives ranging configuration information, or the first device sends ranging configuration information, where the ranging configuration information is used to configure one or more pieces of the following information: whether a ranging signal sent in a ranging process supports the integrity protection function, a format of a ranging radio frame that carries the ranging signal, a length of the ranging signal in the ranging process, and a pulse repetition frequency mode.

Optionally, the ranging configuration information is carried in a ranging channel and preamble selection information element or a ranging reply time negotiation information element.

This solution provides a configuration information negotiation manner for a newly added signal or radio frame supporting both the ranging function and the integrity protection function, to lay a foundation for a subsequent ranging process.

According to a second aspect, this application provides a method for transmitting a ranging signal in an ultra-wideband. The method includes: a second device sends a signal, where the signal is used to generate a first ranging signal; the second device receives a signal used for ranging, where the signal used for ranging is obtained after at least a part of the first ranging signal is transmitted through a radio channel, and at least the part of the first ranging signal supports an integrity protection function and a ranging function; the second device inputs an original ranging signal and the signal used for ranging into a correlator to perform a correlation operation, to obtain a first moment of a maximum value output by the correlator, where the original ranging signal is generated based on a first sequence; the second device performs integrity check on the signal used for ranging, to obtain a check result; and if the check result is that the integrity check on the signal used for ranging succeeds, the second device determines the first moment as a moment of arrival of the signal used for ranging. When a correlation operation result obtained by performing a correlation operation on a second sequence and a check sequence is greater than or equal to a preset threshold, the check result is that the integrity check on the signal used for ranging succeeds. When a correlation operation result obtained by performing a correlation operation on the second sequence and the check sequence is less than the preset threshold, the check result is that the integrity check on the signal used for ranging fails. The second sequence is the first sequence, or the second sequence is a sequence obtained after time reversal processing is performed on the first sequence. The check sequence is obtained by performing equal-interval sampling after a real part of the signal used for ranging is obtained, a start moment of the equal-interval sampling is the first moment, and a length of the check sequence is equal to a length of the first sequence.

In this solution, the second device sends the signal, so that the first device generates the first ranging signal; and the second device performs integrity check on the received signal, to determine whether a ranging process is interfered with, thereby implementing integrity protection for the ranging signal.

With reference to the second aspect, in a possible implementation, the signal includes pilot information, and the second sequence is the same as the first sequence.

With reference to the second aspect, in a possible implementation, the signal is the original ranging signal, and the second sequence is the sequence obtained after time reversal processing is performed on the first sequence.

With reference to the second aspect, in a possible implementation, that the check sequence is obtained by performing equal-interval sampling on the signal used for ranging after a real part is obtained includes: the check sequence is generated based on a polarity of a sample sequence, and the sample sequence is obtained after equal-interval sampling is performed after the real part of the signal used for ranging is obtained.

With reference to the second aspect, in a possible implementation, a length of at least the part of the first ranging signal is equal to a length of the original ranging signal.

With reference to the second aspect, in a possible implementation, at least the part of the first ranging signal is carried in a ranging radio frame.

With reference to the second aspect, in a possible implementation, before that the second device receives a signal used for ranging, the method further includes: the second device sends ranging configuration information, or the second device receives ranging configuration information, where the ranging configuration information is used to configure one or more pieces of the following information: whether a ranging signal sent in a ranging process supports the integrity protection function, a format of a ranging radio frame that carries the ranging signal, a length of the ranging signal sent in the ranging process, and a pulse repetition frequency mode.

According to a third aspect, this application provides a communication apparatus. The communication apparatus may be a first device or a chip, for example, a Wi-Fi chip, in the first device. The communication apparatus includes: a transceiver module, configured to receive a first signal; and a processing module, configured to preprocess the first signal to obtain a second signal, where the preprocessing includes channel estimation or power normalization, where the processing module is further configured to generate a first ranging signal based on at least the second signal, where the first ranging signal meets a signal obtained after convolution processing is performed on an original ranging signal and a signal obtained after time reversal is or time reversal and conjugation processing are performed on the second signal, or the first ranging signal meets a signal obtained after time reversal is or time reversal and conjugation processing are performed on the second signal; and the transceiver module is further configured to send at least a part of the first ranging signal, where at least the part of the first ranging signal supports an integrity protection function and a ranging function.

With reference to the third aspect, in a possible implementation, the first signal includes pilot information, the preprocessing includes channel estimation, and the second signal is a first channel impulse response from a second device to the first device. The processing module is specifically configured to: obtain a second channel impulse response after performing first processing on the first channel impulse response, where the first processing includes time reversal or time reversal and conjugation processing; and perform convolution processing based on the second channel impulse response and the original ranging signal.

Optionally, the processing module is specifically configured to perform convolution processing on the original ranging signal and a response obtained after normalization processing is performed on the second channel impulse response.

With reference to the third aspect, in a possible implementation, the first signal is obtained after the original ranging signal is transmitted through a radio channel, and the preprocessing includes power normalization. The processing module is specifically configured to obtain the first ranging signal after performing time reversal or time reversal and conjugation processing on the second signal.

With reference to the third aspect, in a possible implementation, a length of at least the part of the first ranging signal is equal to a length of the original ranging signal.

With reference to the third aspect, in a possible implementation, at least the part of the first ranging signal is carried in a ranging radio frame.

With reference to the third aspect, in a possible implementation, the transceiver module is further configured to receive ranging configuration information, or send ranging configuration information, where the ranging configuration information is used to configure one or more pieces of the following information: whether a ranging signal sent in a ranging process supports the integrity protection function, a format of a ranging radio frame that carries the ranging signal, a length of the ranging signal in the ranging process, and a pulse repetition frequency mode.

According to a fourth aspect, this application provides a communication apparatus. The communication apparatus may be a second device or a chip, for example, a Wi-Fi chip, in the second device. The communication apparatus includes: a transceiver module, configured to send a signal, where the signal is used to generate a first ranging signal, where the transceiver module is further configured to receive a signal used for ranging, where the signal used for ranging is obtained after at least a part of the first ranging signal is transmitted through a radio channel, and at least the part of the first ranging signal supports an integrity protection function and a ranging function; a correlation operation module, configured to input an original ranging signal and the signal used for ranging into a correlator to perform a correlation operation, to obtain a first moment of a maximum value output by the correlator, where the original ranging signal is generated based on a first sequence; an integrity check module, configured to perform integrity check on the signal used for ranging, to obtain a check result, where when a correlation operation result obtained by performing a correlation operation on a second sequence and a check sequence is greater than or equal to a preset threshold, the check result is that the integrity check on the signal used for ranging succeeds; or when a correlation operation result obtained by performing a correlation operation on the second sequence and the check sequence is less than the preset threshold, the check result is that the integrity check on the signal used for ranging fails, where the second sequence is the first sequence, or the second sequence is a sequence obtained after time reversal processing is performed on the first sequence; and the check sequence is obtained by performing equal-interval sampling after a real part of the signal used for ranging is obtained, a start moment of the equal-interval sampling is the first moment, and a length of the check sequence is equal to a length of the first sequence; and a determining module, configured to: when the check result is that the integrity check on the signal used for ranging succeeds, determine the first moment as a moment of arrival of the signal used for ranging.

With reference to the fourth aspect, in a possible implementation, the signal includes pilot information, and the second sequence is the same as the first sequence.

With reference to the fourth aspect, in a possible implementation, the signal is the original ranging signal, and the second sequence is the sequence obtained after time reversal processing is performed on the first sequence.

With reference to the fourth aspect, in a possible implementation, that the check sequence is obtained by performing equal-interval sampling on the signal used for ranging after a real part is obtained includes: the check sequence is generated based on a polarity of a sample sequence, and the sample sequence is obtained after equal-interval sampling is performed after the real part of the signal used for ranging is obtained.

With reference to the fourth aspect, in a possible implementation, a length of at least the part of the first ranging signal is equal to a length of the original ranging signal.

With reference to the fourth aspect, in a possible implementation, at least the part of the first ranging signal is carried in a ranging radio frame.

With reference to the fourth aspect, in a possible implementation, the transceiver module is further configured to send ranging configuration information, or receive ranging configuration information, where the ranging configuration information is used to configure one or more pieces of the following information: whether a ranging signal sent in a ranging process supports the integrity protection function, a format of a ranging radio frame that carries the ranging signal, a length of the ranging signal sent in the ranging process, and a pulse repetition frequency mode.

According to a fifth aspect, this application provides a method for communicating ranging configuration information. The method includes: a communication apparatus sends ranging configuration information, or the communication apparatus receives ranging configuration information. The ranging configuration information includes a type of a ranging radio frame, and the type of the ranging radio frame is a radio frame type supporting a ranging function, or a radio frame type supporting both the ranging function and an integrity protection function.

This solution provides a configuration information negotiation manner for a newly added signal or radio frame supporting both the ranging function and the integrity protection function, to lay a foundation for a subsequent ranging process.

According to a sixth aspect, this application provides a communication apparatus. The communication apparatus includes: a transceiver module, configured to send ranging configuration information, or receive ranging configuration information. The ranging configuration information includes a type of a ranging radio frame, and the type of the ranging radio frame is a radio frame type supporting a ranging function, or a radio frame type supporting both the ranging function and an integrity protection function.

With reference to the fifth or the sixth aspect, in a possible implementation, the ranging configuration information further includes one or more pieces of the following: a format of the ranging radio frame, a length of a signal supporting the ranging function and/or the integrity protection function, and a pulse repetition frequency mode.

With reference to the fifth or the sixth aspect, in a possible implementation, the ranging configuration information is carried in a ranging channel and preamble selection information element or a ranging reply time negotiation information element.

According to a seventh aspect, this application provides a communication apparatus. The communication apparatus is specifically a first device, and includes a processor and a transceiver. The transceiver is configured to receive a first signal; the processor is configured to preprocess the first signal to obtain a second signal, where the preprocessing includes channel estimation or power normalization; the processor is further configured to generate a first ranging signal based on at least the second signal, where the first ranging signal meets a signal obtained after convolution processing is performed on an original ranging signal and a signal obtained after time reversal is or time reversal and conjugation processing are performed on the second signal, or the first ranging signal meets a signal obtained after time reversal is or time reversal and conjugation processing are performed on the second signal; and the transceiver is further configured to send at least a part of the first ranging signal, where at least the part of the first ranging signal supports an integrity protection function and a ranging function.

Optionally, the communication apparatus further includes a memory. The memory is configured to store a computer program, and the computer program includes program instructions.

According to an eighth aspect, an embodiment of this application provides a communication apparatus. The communication apparatus is specifically a second device, and includes a processor and a transceiver. The transceiver is configured to send a signal, where the signal is used to generate a first ranging signal, where the transceiver is further configured to receive a signal used for ranging, where the signal used for ranging is obtained after at least a part of the first ranging signal is transmitted through a radio channel, and at least the part of the first ranging signal supports an integrity protection function and a ranging function; the processor is configured to input an original ranging signal and the signal used for ranging into a correlator to perform a correlation operation, to obtain a first moment of a maximum value output by the correlator, where the original ranging signal is generated based on a first sequence; the processor is further configured to perform integrity check on the signal used for ranging, to obtain a check result; and the processor is further configured to: when the check result is that the integrity check on the signal used for ranging succeeds, determine the first moment as a moment of arrival of the signal used for ranging. When a correlation operation result obtained by performing a correlation operation on a second sequence and a check sequence is greater than or equal to a preset threshold, the check result is that the integrity check on the signal used for ranging succeeds; or when a correlation operation result obtained by performing a correlation operation on the second sequence and the check sequence is less than the preset threshold, the check result is that the integrity check on the signal used for ranging fails, where the second sequence is the first sequence, or the second sequence is a sequence obtained after time reversal processing is performed on the first sequence; and the check sequence is obtained by performing equal-interval sampling after a real part of the signal used for ranging is obtained, a start moment of the equal-interval sampling is the first moment, and a length of the check sequence is equal to a length of the first sequence.

Optionally, the communication apparatus further includes a memory. The memory is configured to store a computer program, and the computer program includes program instructions.

According to a ninth aspect, an embodiment of this application provides a communication apparatus. The communication apparatus is implemented in a product form of a chip, and includes a processor and an interface circuit. The interface circuit is configured to receive code instructions and transmit the code instructions to the processor. The processor is configured to run the code instructions to perform the method for transmitting a ranging signal in a UWB according to any one of the first aspect, the second aspect, or the possible implementations of any one of the first aspect or the second aspect. Optionally, the communication apparatus further includes a memory, and the memory is connected to the processor by using a circuit. Optionally, the processor and the memory may be units physically independent of each other, or the memory may be integrated with the processor.

According to a tenth aspect, an embodiment of this application provides a communication apparatus. The communication apparatus is implemented in a product form of a chip, and includes a processor and an interface circuit. The interface circuit is configured to receive code instructions and transmit the code instructions to the processor. The processor is configured to run the code instructions to perform the method for communicating ranging configuration information according to any one of the fifth aspect or the possible implementations of the fifth aspect. Optionally, the communication apparatus further includes a memory, and the memory is connected to the processor by using a circuit. Optionally, the processor and the memory may be units physically independent of each other, or the memory may be integrated with the processor.

According to an eleventh aspect, an embodiment of this application provides a computer-readable storage medium. The computer-readable storage medium stores a computer program. The computer program includes program instructions. When the program instructions are run on a computer, the computer is enabled to perform the method for transmitting a ranging signal in a UWB according to the first aspect or the second aspect.

According to a twelfth aspect, an embodiment of this application provides a computer program product. When the computer program product is run on a computer, the computer is enabled to perform the method for transmitting a ranging signal in a UWB according to the first aspect or the second aspect.

According to a thirteenth aspect, an embodiment of this application provides a communication system. The communication system includes the first device described in the first aspect, the third aspect, the fifth aspect, or the sixth aspect, and the second device described in the second aspect or the fourth aspect.

Through implementation of the embodiments of this application, a receive end can have a capability of detecting whether a ranging process is interfered with, thereby ensuring integrity of a ranging signal without compromising ranging performance of a system.

**BRIEF DESCRIPTION OF DRAWINGS**

To describe technical solutions in embodiments of this application more clearly, the following briefly describes accompanying drawings used for describing embodiments.

FIG. 1 is a schematic diagram of a ranging principle according to an embodiment of this application;

FIG. 2 is an architectural diagram of a ranging positioning system according to an embodiment of this application;

FIG. 3 is a first schematic flowchart of a method for transmitting a ranging signal in a UWB according to an embodiment of this application;

FIG. 4 is a second schematic flowchart of a method for transmitting a ranging signal in a UWB according to an embodiment of this application;

FIG. 5a is a schematic diagram of comparison between an attack success rate with integrity protection and an attack success rate without integrity protection according to an embodiment of this application;

FIG. 5b is a schematic diagram of comparison between a ranging error rate with integrity protection and a ranging error rate without integrity protection according to an embodiment of this application;

FIG. 5c is a schematic diagram of comparison between a ranging event detection rate with integrity protection and a ranging event detection rate without integrity protection according to an embodiment of this application;

FIG. 6 is a third schematic flowchart of a method for transmitting a ranging signal in a UWB according to an embodiment of this application;

FIG. 7 is a fourth schematic flowchart of a method for transmitting a ranging signal in a UWB according to an embodiment of this application;

FIG. 8 is a schematic diagram of a frame format of a ranging radio frame according to an embodiment of this application;

FIG. 9 is a schematic diagram of a frame format of an STS+ in a ranging radio frame according to an embodiment of this application;

FIG. 10 is a schematic flowchart of a method for transmitting ranging configuration information according to an embodiment of this application;

FIG. 11 is a schematic diagram of a structure of a communication apparatus 1 according to an embodiment of this application;

FIG. 12 is a schematic diagram of a structure of a communication apparatus 2 according to an embodiment of this application; and

FIG. 13 is a schematic diagram of a structure of a communication apparatus 1000 according to an embodiment of this application.

**DESCRIPTION OF EMBODIMENTS**

The following clearly describes the technical solutions in embodiments of this application with reference to accompanying drawings in embodiments of this application.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

In descriptions of this application, words such as "first" and "second" are merely used to distinguish between different objects, and do not constitute a limitation on a quantity or an execution sequence. In addition, words such as "first" and "second" are not limited to being definitely different. In addition, terms "include", "have", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the system, the product, or the device.

In this application, words such as "an example" or "for example" are used to represent giving an example, an illustration, or a description. Any embodiment or design solution described by using "an example" or "for example" in this application shall not be construed as being more preferred or having more advantages than another embodiment or design solution. Exactly, use of the words such as "an example" or "for example" is intended to present a related concept in a specific manner.

It should be understood that, in this application, "when" and "if" both indicate that an apparatus performs corresponding processing in an objective case, do not constitute a limitation on time, do not require that the apparatus should perform a determining action during implementation, and do not mean that there is another limitation.

In this application, an element represented in a singular form is intended to represent "one or more", but does not represent "one and only one", unless otherwise specified.

It may be understood that in embodiments of this application, "B corresponding to A" indicates that there is a correspondence between A and B, and B may be determined based on A. However, it should be further understood that determining (or generating) B according to (or based on) A does not mean that B is determined (or generated) according to (or based on) only A, and B may be alternatively determined (or generated) according to (or based on) A and/or other information.

The following briefly describes some related content, terms, or nouns in this application.

1. Basic ranging principle

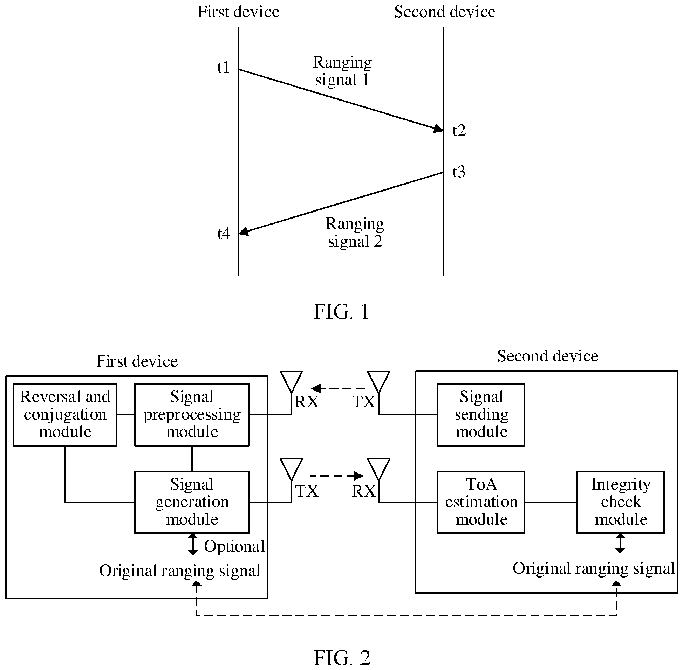

The basic ranging principle is as follows: Two communication parties calculate a distance between the two communication parties by measuring round trip time of a message. A ranging sequence obtained after pulse shaping and modulation are performed on a ranging sequence sent by a transmit end arrives at a receive end. The receive end performs a correlation operation on the received ranging sequence and a locally stored sequence, and obtains time of arrival (t2 and t4) based on a location of a correlation peak. FIG. 1 is a schematic diagram of a ranging principle according to an embodiment of this application. As shown in FIG. 1, a first device sends a ranging signal 1 at a moment t1, and the ranging signal 1 arrives at a second device at a moment t2. After the second device processes the received ranging signal, the second device sends a ranging signal 2 to the first device at a moment t3, and the ranging signal 2 arrives at the first device at a moment t4. The ranging signal is obtained after pulse shaping and modulation are performed on a ranging sequence. The modulation is, for example, pulse position modulation (pulse position modulation, PPM) or pulse amplitude modulation (pulse amplitude modulation, PAM). A distance d between the first device and the second device may be calculated according to the following formulas (1-1) and (1-2):

$$d = \frac{t_{RTT}}{2} \times c \dots\dots\dots\dots\dots\dots\dots\dots\dots\dots\dots\dots\dots\dots\dots\dots\dots\dots\dots\dots\dots (1\text{-}1);$$

and

$$t_{RTT} = (t4 - t1) - (t3 - t2) \dots\dots\dots\dots\dots\dots\dots\dots\dots\dots\dots\dots\dots\dots\dots (1\text{-}2),$$

where

c represents a speed of light, and $t_{RTT}$ represents round trip time of a ranging signal (or message).

2. Distance-reduction attack (distance-reduction attack)

The distance-reduction attack (distance-reduction attack) is a common attack manner for the foregoing ranging process (the ranging process shown in FIG. 1), and may be specifically implemented in a plurality of forms, such as a Cicada attack, a Cicada++ attack, and a GhostPeak attack. For a specific attack manner, refer to descriptions in the conventional technology. Details are not described in this application. In the foregoing attack forms (such as the Cicada attack, the Cicada++ attack, and the GhostPeak attack), an attacker aims to generate an interference signal, to enable signal time of arrival estimated by a device receiving a ranging signal to be earlier than actual time, and consequently when an actual distance is long, two ranging parties mistakenly consider that a distance is short. This may cause property losses in applications such as intelligent sensing of an automobile door lock and location-based contactless payment.

3. Secure ranging solution in the IEEE 802.15.4z standard

An early detect/late commit (early detect/late commit, ED/LC) attack (attack) is also a common attack manner for the foregoing ranging process (for example, the ranging process shown in FIG. 1). In the ED/LC attack, an attacker early infers an entire ranging signal based on a received ranging signal segment by using structural predictability of the ranging signal, and sends the entire ranging signal to a receiver, to enable the receiver to mistakenly estimate signal time of arrival.

The IEEE 802.15.4z standard proposes a solution for encrypting a ranging sequence, in which a 128-bit key is mainly used to encrypt a 128-bit ranging sequence by using an advanced encryption standard (advanced encryption standard, AES), to obtain a 128-bit random sequence, and a random sequence obtained after pulse shaping and modulation are performed on the random sequence is sent. For a specific encryption process, refer to related descriptions in the 802.15.4z standard. Details are not described in this application.

Because a ranging sequence is encrypted, an attacker cannot infer an entire ranging signal based on a received ranging signal segment. Therefore, the solution for encrypting a ranging sequence can defend against the ED/LC attack. However, the solution for encrypting a ranging sequence cannot defend against distance-reduction attacks such as Cicada, Cicada++, and GhostPeak. In these attack forms, an attacker does not need to decode or infer a valid ranging signal, and only needs to send a random interference signal to complete an attack. Therefore, the solution for encrypting a ranging sequence cannot defend against such attacks.

4. Maximum peak to early peak ratio (maximum peak to early peak ratio, MPEP)

For the foregoing distance-reduction attack, a proper MPEP threshold may be set at a receive end to reduce a probability that the receive end mistakenly determines an invalid peak (a redundant peak that is caused by an interference signal and that appears in front of a maximum peak output by a correlator) as the first path, to defend against the distance-reduction attack (or defend against interference of an interference signal). Although this method can defend against the distance-reduction attack to a specific extent, performance in the method depends on selection of an MPEP threshold. For selection of an MPEP threshold, an empirical value is usually selected by using an experiment or an actual test. Due to complexity of a radio propagation environment and randomness of an interference signal, even an empirical value obtained by using repeated experiments may not effectively reduce a probability of mistakenly determining an invalid peak as the first path.

In addition, in the method, security is improved at the cost of a decrease in ranging performance. In other words, if a relatively small MPEP threshold is selected, a relatively good effect for defending against the distance-reduction attack may be achieved, but a receive end usually misses the first path, causing a decrease in ranging precision.

5. Message time of arrival code (message time of arrival code, MTAC)

For the foregoing distance-reduction attack, a message time of arrival code (MTAC) may be used to detect whether a distance-reduction attack occurs in a ranging process. For example, in FIG. 1, the first device may generate an MTAC signal based on a ranging sequence and a key agreed on by two ranging parties (the first device and the second device), and may send the MTAC signal to the second device. The MTAC signal may be used for ranging and check. After receiving the MTAC signal, the second device demodulates and decodes the MTAC signal, to recover the ranging sequence, where the ranging sequence is used for ranging; and reconstructs an MTAC signal by using the recovered ranging sequence and the key agreed on by the two ranging parties (the first device and the second device). The second device may obtain, through comparison, a difference between the reconstructed MTAC signal and the received MTAC signal (for example, perform subtraction between the two signals, and calculate power of a difference signal). If the difference is greater than a threshold, check fails, and it indicates that a ranging signal is attacked.

However, in a complex multipath propagation environment, even if there is no distance-reduction attack, a received MTAC signal may distort, and channel estimation may be inaccurate (for example, in a low signal-to-noise ratio condition), and consequently it is possible that a decoding error rate is relatively high. Therefore, in this case, there may be a relatively large difference between the reconstructed MTAC signal and the received MTAC signal, and consequently check fails. Therefore, whether a ranging process is attacked cannot be accurately determined based on an MTAC. In addition, the foregoing method for detecting, by using an MTAC, whether a distance-reduction attack occurs in a ranging process depends on detection determining (for example, demodulation and decoding of an MTAC signal) of a receiver. In a multipath channel, channel equalization needs to be performed before signal detection determining. Implementation complexity of a channel equalization process is high, causing a sharp increase in system implementation costs.

In conclusion, in the method (the third point) for encrypting a ranging sequence, confidentiality protection for a ranging signal can be implemented, but a distance-reduction attack cannot be defended against. In the method (the fourth point) for setting a proper MPEP threshold at a receive end, integrity protection for a ranging signal can be implemented, but there is no universal threshold selection method and it is difficult to balance security and ranging performance. In the MTAC detection method (the fifth point), whether a ranging process is attacked cannot be accurately determined, and consequently integrity of an MTAC signal cannot be ensured.

Confidentiality may be a feature that information cannot be used or known by an unauthorized individual, entity, or process. Integrity may be a feature that information is kept not damaged or modified, or not lost, or the information cannot be changed without authorization during transmission, exchange, storage, and processing of the information.

In this application, confidentiality may be understood as a feature that a device other than two ranging parties cannot know a ranging sequence carried in a ranging signal, and integrity may be understood as a feature that a device other than two ranging parties cannot tamper with a ranging sequence carried in a ranging signal. Confidentiality protection may be understood as preventing a device other than two ranging parties from knowing a ranging sequence carried in a ranging signal. Integrity protection may be understood as determining whether a ranging sequence in a ranging signal is tampered with by another device, or determining credibility of the ranging sequence.

Embodiments of this application provide a method for transmitting a ranging signal in a UWB. A waveform of a ranging signal is reconstructed, so that a receive end can have a capability of detecting whether a ranging process is interfered with, thereby ensuring integrity of the ranging signal without compromising ranging performance of a system.

Technical solutions provided in the embodiments of this application may be applied to a ranging and positioning scenario in wireless communication perception. In the ranging and positioning scenario, two communication parties may establish a wireless communication connection through authentication and negotiation according to a related protocol. After the wireless communication connection is established, a transmit end sends a ranging radio frame to a receive end. After receiving the ranging radio frame, the receive end calculates time of arrival, and returns another ranging radio frame to the transmit end. A distance (for example, the foregoing formula (1-1)) between the two parties (the transmit end and the receive end) is calculated by calculating a message round trip time (for example, the foregoing formula (1-2)), to complete a ranging process.

FIG. 2 is an architectural diagram of a ranging positioning system according to an embodiment of this application. As shown in FIG. 2, the ranging positioning system includes at least two devices, for example, a first device and a second device. In actual application, the first device and the second device may be different roles played by a same device at different moments. That is, at a moment, the first device is a transmit end and performs an operation of the transmit end; however, at another moment, the first device may be a receive end and perform an operation of the receive end. The second device is similar to the first device. That is, at a moment, the second device is a transmit end and performs an operation of the transmit end; however, at another moment, the second device may be a receive end and perform an operation of the receive end. For example, in FIG. 2, the first device is a transmit end, and the second device is a receive end.

The first device includes a signal preprocessing module, a reversal and conjugation module, and a signal generation module. The signal preprocessing module is configured to estimate a channel impulse response (channel impulse response, CIR) from the second device to the first device, or perform a power normalization operation on a received signal waveform. If the second device sends a channel measurement signal, the signal preprocessing module performs a CIR estimation operation; or if the second device sends an original ranging signal, the signal preprocessing module performs a power normalization operation. The reversal and conjugation module is configured to perform time reversal and conjugation operations on a preprocessed waveform. The signal generation module is configured to generate an original ranging signal, for example, a scrambled timestamp sequence (scrambled timestamp sequence, STS) in the IEEE 802.15.4z standard. The signal generation module is further configured to generate a ranging signal having an integrity protection function and a ranging function. If the second device sends a channel measurement signal, the ranging signal is obtained after a convolution operation is performed on an original ranging signal and a reversed and conjugated CIR. If the second device sends an original ranging signal, the ranging signal is an output signal of the reversal and conjugation module. The ranging signal having the integrity protection function and the ranging function is sent to the second device by using an antenna.

The second device includes a signal sending module, a time of arrival (Time of Arrival, TOA) estimation module, and an integrity check module. The signal sending module is configured to send a channel measurement signal or an original ranging signal, where the signal is sent from an antenna port to the first device. The ToA estimation module is configured to perform ToA estimation by using a ranging signal sent by the first device, to obtain a timestamp, where the timestamp is used for ranging or positioning. The integrity check module is configured to perform a correlation operation on a local ranging signal and a signal obtained after sampling is performed on a received signal, to determine whether the received signal is tampered with.

A dashed-line part of the original ranging signal in FIG. 2 indicates that the first device and the second device obtain a same original ranging signal (for example, an STS in the IEEE 802.15.4z standard) by using a same operation.

It should be understood that both the first device and the second device shown in FIG. 2 have a plurality of antennas. However, in actual application, a plurality of antennas or a single antenna may be configured in the first device. Similarly, a single antenna or a plurality of antennas may be configured in the second device. This is not limited in this embodiment of this application.

The following describes in detail the technical solutions provided in this application with reference to more accompanying drawings.

In this application, unless otherwise specified, mutual reference may be made to same or similar parts in embodiments or implementations. In embodiments of this application and implementations in the embodiments, unless otherwise specified or a logical conflict occurs, consistency exists between and mutual reference may be made to terms and/or descriptions in different embodiments and implementations in the embodiments. Technical features in different embodiments and implementations in the embodiments may be combined to form a new embodiment or implementation based on an internal logical relationship thereof. The following implementations of this application do not constitute a limitation on the protection scope of this application.

For ease of description of the technical solutions provided in this application, all the following embodiments provide descriptions by using an example in which a first device is a transmit end (a party sending a ranging signal) and a second device is a receive end (a party receiving the ranging signal). However, in actual application, the first device and the second device may be different roles played by a same device at different moments. That is, at a moment, the first device is a transmit end and performs an operation of the transmit end; however, at another moment, the first device may be a receive end and perform an operation of the receive end. The second device is similar to the first device.

Both the first device and the second device in this application support the 802.15.4z standard, and may further support a next-generation standard of the 802.15.4z standard. Certainly, the first device and the second device may further support a narrowband communication standard, for example, a Wi-Fi standard (the 802.11 series standard), a Bluetooth standard, or Zigbee.

**Embodiment 1**

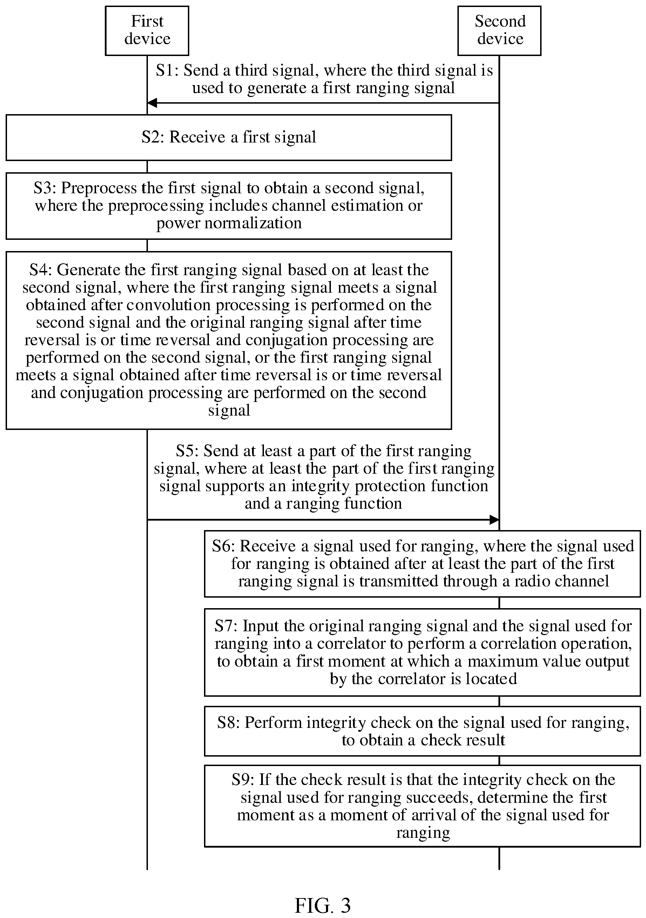

FIG. 3 is a first schematic flowchart of a method for transmitting a ranging signal in a UWB according to an embodiment of this application. As shown in FIG. 3, the method for transmitting a ranging signal in a UWB includes but is not limited to the following steps.

S1: A second device sends a third signal, where the third signal is used to generate a first ranging signal.

Optionally, the third signal may be an original ranging signal. For a manner of generating the third signal, refer to descriptions in the following embodiments. Details are not described herein. Alternatively, the third signal is a channel measurement signal, and includes pilot information, for example, a preamble. The pilot information may be used for channel estimation.

S2: The first device receives a first signal.

Optionally, when a signal is transmitted on a radio channel, the signal is, for example, reflected, diffracted, or scattered by various obstacles, and consequently some changes may occur when a signal sent by a transmit end arrives at a receive end. Therefore, although the second device sends the third signal, the first device receives the first signal after radio channel transmission. The first signal and the third signal may differ in waveform, but carry same information.

S3: The first device preprocesses the first signal to obtain a second signal, where the preprocessing includes channel estimation or power normalization.

Optionally, the first device performs channel estimation to estimate a channel impulse response (CIR) from the second device to the first device. For specific implementation, refer to corresponding descriptions in the following Embodiment 2. Details are not described herein. Alternatively, the first device performs a power normalization operation on the received first signal. For specific implementation, refer to corresponding descriptions in the following Embodiment 3. Details are not described herein.

S4: The first device generates the first ranging signal based on at least the second signal, where the first ranging signal meets a signal obtained after convolution processing is performed on an original ranging signal and a signal obtained after time reversal is or time reversal and conjugation processing are performed on the second signal, or the first ranging signal meets a signal obtained after time reversal is or time reversal and conjugation processing are performed on the second signal.

Optionally, the first device performs reversal and conjugation operations on a preprocessed signal (the second signal), to generate the first ranging signal. For a specific manner of generating the first ranging signal, refer to descriptions in the following Embodiment 2 or Embodiment 3. Details are not described herein.

S5: The first device sends at least a part of the first ranging signal, where at least the part of the first ranging signal supports an integrity protection function and a ranging function.

Optionally, the first device may directly send the first ranging signal, or may send a truncated first ranging signal. A truncated length is a length of the original ranging signal. For example, a trailer of the first ranging signal is reserved, and the trailer and the original ranging signal are equal in length. At least the part of the first ranging signal may be carried in a ranging radio frame for sending.

S6: The second device receives a signal used for ranging, where the signal used for ranging is obtained after at least the part of the first ranging signal is transmitted through a radio channel.

S7: The second device inputs the original ranging signal and the signal used for ranging into a correlator to perform a correlation operation, to obtain a first moment of a maximum value output by the correlator.

Optionally, the second device performs ToA estimation by using a peak ranging algorithm, that is, inputs the original ranging signal and the signal used for ranging into the correlator to perform the correlation operation, to obtain a moment (the first moment) of the maximum value output by the correlator.

S8: The second device performs integrity check on the signal used for ranging, to obtain a check result.

S9: If the check result is that the integrity check on the signal used for ranging succeeds, the second device determines the first moment as a moment of arrival of the signal used for ranging.

Optionally, the second device performs sampling on the signal used for ranging, and obtains a check sequence through determining; performs a correlation operation on the check sequence and a first sequence to obtain a correlation operation result; and obtains, through comparison, a value relationship between the correlation operation result and a preset threshold, to determine whether the integrity check on the signal used for ranging succeeds. In an example, if the correlation operation result is greater than or equal to the preset threshold, it indicates that a ranging process is not interfered with, and a ranging result is credible; otherwise, if the correlation operation result is less than the preset threshold, it indicates that a ranging process is interfered with, and a ranging result is incredible. For a specific integrity check manner, refer to descriptions in the following Embodiment 2 or Embodiment 3. Details are not described herein.

In this embodiment of this application, the signal from the second device is preprocessed, and then a new physical layer ranging signal is constructed through time reversal and conjugation, where the signal has the integrity protection function, so that a receive end can have a capability of detecting whether a ranging process is interfered with, thereby ensuring integrity of the ranging signal without losing ranging performance of a system.

**Embodiment 2**

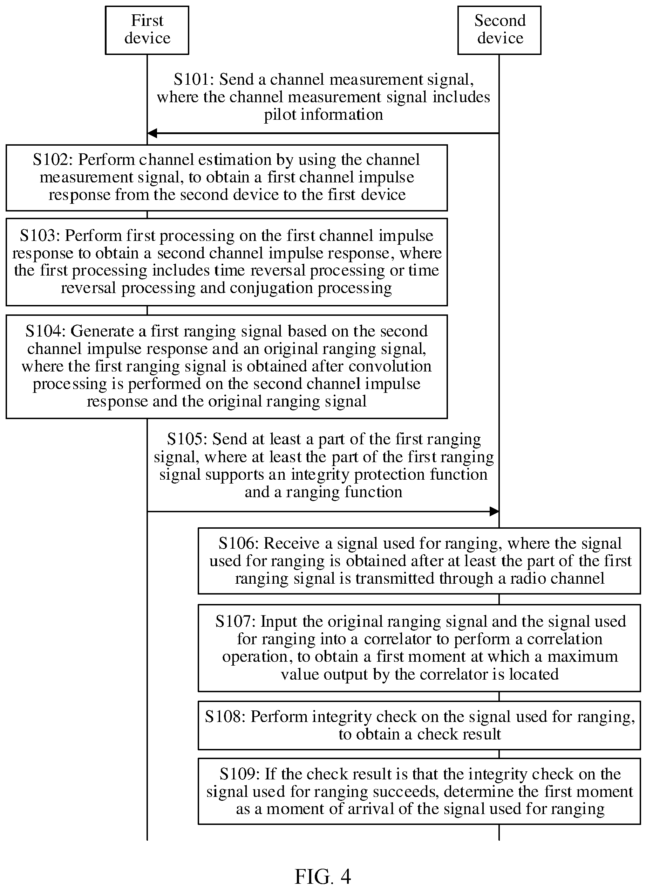

FIG. 4 is a second schematic flowchart of a method for transmitting a ranging signal in a UWB according to an embodiment of this application. Generation and integrity protection of a ranging signal obtained based on channel impulse response (channel impulse response, CIR) reversal are mainly described. As shown in FIG. 4, the method for transmitting a ranging signal in a UWB includes but is not limited to the following steps.

S101: A second device sends a channel measurement signal, where the channel measurement signal includes pilot information. Correspondingly, the first device receives the channel measurement signal.

Optionally, the second device may use any signal sent to the first device to carry the pilot information. In this embodiment of this application, the signal carrying the pilot information is referred to as the channel measurement signal. The second device sends the channel measurement signal (a third signal including the pilot information) to the first device, and correspondingly, the first device receives the channel measurement signal (a first signal including the pilot information). In other words, the channel measurement signal includes the pilot information, for example, a preamble (preamble). For example, the first device sends a request signal to the second device, where the request signal may be used to request to perform a ranging process (or used to request to start a ranging process). After receiving the request signal, the second device feeds back an acknowledgment signal (the channel measurement signal) to the first device, where the acknowledgment signal includes the pilot information (for example, the preamble).

S102: The first device performs channel estimation by using the channel measurement signal, to obtain a first channel impulse response from the second device to the first device.

S103: The first device performs first processing on the first channel impulse response to obtain a second channel impulse response, where the first processing includes time reversal processing or time reversal processing and conjugation processing.

S104: The first device generates a first ranging signal based on the second channel impulse response and an original ranging signal, where the first ranging signal is obtained after convolution processing is performed on the second channel impulse response and the original ranging signal.

S105: The first device sends at least a part of the first ranging signal, where at least the part of the first ranging signal supports an integrity protection function and a ranging function.

Optionally, after receiving the channel measurement signal from the second device, the first device may perform channel estimation (channel estimation) by using the pilot information in the channel measurement signal, to obtain the first channel impulse response from the second device to the first device. For ease of description, the first channel impulse response is denoted as $h_{21}(t)$. The first device may obtain the second channel impulse response after performing time reversal on the first channel impulse response; or the first device obtains the second channel impulse response after performing time reversal and conjugation on the first channel impulse response. It should be understood that, if the first channel impulse response is a real number, because a conjugate of the real number is the real number, a conjugation operation may not need to be performed on the first channel impulse response. Certainly, a conjugation operation may be performed on the first channel impulse response regardless of whether the first channel impulse response is a real number or a complex number. For ease of description, the second channel impulse response is denoted as h'$_{21}$(-t), where h'$_{21}$(t) indicates that h$_{21}$(t) is conjugated. The first device may generate the original ranging signal based on a first sequence. The first sequence may be a sequence that can be known by both the first device and the second device, for example, a sequence determined by the first device and the second device through negotiation, a preset or predefined sequence, a disclosed sequence, or a sequence defined in a standard. For example, the first sequence may be a scrambled timestamp sequence (scrambled timestamp sequence, STS). A manner of generating the original ranging signal may be shown in the following formula (2-1):

$$p(t) = \sum_{k} X[k]g(t - kT) \dots\dots\dots\dots\dots\dots\dots\dots\dots\dots\dots\dots\dots(2\text{-}1),$$

where p(t) represents the original ranging signal, X[k] represents the first sequence, g(t) represents a rectangular window function, and T represents an interval between adjacent elements in the first sequence.

After generating the original ranging signal, the first device may perform convolution on the second channel impulse response and the original ranging signal, to generate the first ranging signal. Alternatively, the first device may perform convolution on the original ranging signal and a response obtained after normalization processing is performed on the second channel impulse response, to generate the first ranging signal. The first ranging signal has or supports the integrity protection function and the ranging function. In other words, the first ranging signal supports integrity check and ranging. For example, a mathematical expression of the first ranging signal is the following formula (2-2):

$$s(t) = (\sum_{k} X[k]g(t - kT)) \otimes \frac{h'_{21}(-t)}{\sqrt{\int_{0}^{T_s} |h'_{21}(-t)|^2 \, dt}} \dots\dots\dots\dots\dots\dots\dots\dots\dots(2\text{-}2),$$

where s(t) represents the first ranging signal, and T$_s$ represents duration of a waveform of h'$_{21}$(-t). It should be understood that, because a convolution operation is performed in the foregoing formula (2-2), duration of the first ranging signal is longer than duration of the original ranging signal. In other words, a length of the first ranging signal is greater than a length of the original ranging signal.

Therefore, for the first ranging signal, the first device has two processing manners. In an implementation, the first device may truncate the first ranging signal, to obtain a part of the first ranging signal and send the part of the first ranging signal. For example, a truncation manner is reserving a trailer of the first ranging signal, and the trailer and the original ranging signal p(t) are equal in length. In another implementation, the first device may directly send the first ranging signal without truncating the first ranging signal. At least the part of the first ranging signal supports the integrity protection function and the ranging function.

S 106: The second device receives a signal used for ranging, where the signal used for ranging is obtained after at least the part of the first ranging signal is transmitted through a radio channel.

Optionally, when a signal is transmitted on a radio channel, the signal is, for example, reflected, diffracted, or scattered by various obstacles, and consequently some changes may occur when a signal sent by a transmit end arrives at a receive end. Therefore, some changes occur after at least the part that is of the first ranging signal and that is sent by the first device is transmitted through the radio channel. In this embodiment of this application, a signal obtained after at least the part of the first ranging signal is transmitted to the second device through the radio channel is referred to as the signal used for ranging. The second device receives the signal used for ranging. For ease of description, in this embodiment of this application, the signal that is used for ranging and that is received by the second device is denoted as y(t).

S107: The second device inputs the original ranging signal and the signal used for ranging into a correlator to perform a correlation operation, to obtain a first moment of a maximum value output by the correlator.

Optionally, after receiving the signal used for ranging, the second device may input the original ranging signal p(t) and the signal y(t) used for ranging into the correlator to perform the correlation operation, to obtain the first moment (denoted as t$_2$) of the maximum value output by the correlator. A manner of generating the original ranging signal may be shown in the foregoing formula (2-1). In other words, the second device generates the original ranging signal p(t) by using the locally stored first sequence (for example, the STS), performs the correlation operation on the original ranging signal p(t) and the received signal y(t), and records a moment of a correlation peak, where the moment is the first moment t$_2$.

S108: The second device performs integrity check on the signal used for ranging, to obtain a check result.

Optionally, to check whether a ranging process is interfered with by an interference signal (whether the signal that is used for ranging and that is received by the second device is interfered with by an interference signal), the second device may obtain a real part of the received signal y(t) used for ranging, and then perform equal-interval sampling, to obtain a sample sequence. A sampling start moment is the first moment ($t_2$), and a sampling interval is T (the interval between adjacent elements in the first sequence). A length of the sample sequence is equal to a total length of the first sequence. For example, if a length of the STS is 128 bits, the length of the sample sequence (or a total quantity of samples) is also 128 bits. In an implementation, the second device may directly use the sample sequence as a check sequence (denoted as Y[k]). In another implementation, after obtaining the sample sequence, the second device generates a check sequence (denoted as Y[k]) based on a polarity of each sample. If a polarity of a sample in the sample sequence is positive, a corresponding element in the check sequence is 1; otherwise, if a polarity of a sample in the sample sequence is negative, a corresponding element in the check sequence is -1. The second device may perform a correlation operation on the check sequence (Y[k]) and the locally stored first sequence X[k], to obtain a correlation operation result (denoted as z). The correlation operation result z is represented as follows:

$$z = \sum_{k=1}^{N} X[k]Y[k] \dots\dots\dots\dots\dots\dots\dots\dots\dots\dots\dots\dots\dots\dots\dots\dots\dots\dots(2\text{-}3),$$

where N represents a length of the check sequence Y[k].

The second device may compare the correlation operation result z with a preset threshold, to obtain a check result. When the correlation operation result z is greater than or equal to the preset threshold, the check result is that the integrity check on the signal used for ranging succeeds, that is, the ranging process is not interfered with by an interference signal. When the correlation operation result z is less than the preset threshold, the check result is that the integrity check on the signal used for ranging fails, that is, the ranging process is interfered with by an interference signal. It should be understood that when the correlation operation result z is equal to the preset threshold, whether the check result is that the integrity check succeeds may be determined based on an actual case. This is not limited in this embodiment of this application. For example, an absolute value of the preset threshold is equal to the length of the first sequence. If the first sequence has 128 bits, the preset threshold may be $\pm 128$.

S109: If the check result is that the integrity check on the signal used for ranging succeeds, the second device determines the first moment as a moment of arrival of the signal used for ranging.

Optionally, if the check result is that the integrity check on the signal used for ranging succeeds, it indicates that the ranging process is not interfered with by an interference signal. In this case, the second device may use the first moment ($t_2$) as the moment of arrival of the signal used for ranging. If the check result is that the integrity check on the signal used for ranging fails, it indicates that the ranging process is interfered with by an interference signal. In this case, the second device may notify the first device to, for example, send a new ranging signal, resend the ranging signal at an interval of a period of time, or perform no operation.

In this embodiment of this application, the first device constructs a ranging signal waveform by using a CIR (the first channel impulse response) of a channel between the first device and the second device through time reversal, to implement matching between the ranging signal and the channel. The second device completes time of flight (time of flight, ToF) measurement based on the received signal by using a correlation operation, and determines, through sampling, determining, and a correlation operation, whether the ranging process is interfered with, to implement integrity protection for the ranging signal. In this embodiment of this application, through time reversal, a receive end can detect whether a ranging process is interfered with, thereby providing integrity protection for a ranging signal. In addition, a receiver needs to complete only a simple correlation operation, so that implementation complexity is low. In addition, both ranging and integrity protection are completed based on a same sequence (the first sequence), so that extra overheads introduced by an integrity protection mechanism are small. The receiver performs ranging without depending on a back-off search algorithm anymore. This can improve ranging accuracy in a non-line-of-sight (Non-Line-of-Sight, NLOS) environment, and can also resolve a problem that a correlation peak caused by multipath and interference cannot be distinguished.

For two cases in which interference exists and no interference exists in a ranging process, the following separately analyzes a reason why the technical solutions provided in Embodiment 2 of this application can enable a receive end to have a capability of detecting whether a ranging process is interfered with, namely, a reason why the technical solutions provided in Embodiment 1 of this application can implement integrity protection for a ranging signal.

1. When there is no interference, a mathematical expression of the signal y(t) that is used for ranging and that is received by the second device is shown in the following formula (2-4):

$$y(t) = s(t) \otimes h_{12}(t) + n_2(t) \dots\dots\dots\dots\dots\dots\dots\dots\dots\dots\dots\dots\dots\dots\dots\dots\dots(2\text{-}4),$$

where $h_{12}(t)$ represents a channel impulse response (channel impulse response, CIR) from the first device to the second device, and $n_2(t)$ represents receiver noise of the second device. It is assumed that the channel meets reciprocity, that is, $h_{12}(t)=h_{21}(t)$. In other words, the channel impulse response from the first device to the second device is equal to the channel impulse response from the second device to the first device. The following formula (2-5) may be obtained by substituting the formula (2-2) into the formula (2-4):

$$y(t) = (\sum_k X[k]g(t-kT)) \otimes \frac{h'_{12}(t) \otimes h'_{12}(-t)}{\sqrt{\int_0^{T_s} |h'_{12}(-t)|^2 \, dt}} + n_2(t) \quad \dots\dots\dots\dots\dots\dots\dots\dots\dots\dots (2\text{-}5).$$

For ease of description, the following expression is introduced:

$$h_e(t) = \frac{h'_{12}(t) \otimes h'_{12}(-t)}{\sqrt{\int_0^{T_s} |h'_{12}(-t)|^2 \, dt}} \quad \dots\dots\dots\dots\dots\dots\dots\dots\dots\dots\dots\dots\dots\dots\dots\dots (2\text{-}6),$$

where

$h_e(t)$ represents a channel impulse response (CIR) of an equivalent channel that the original ranging signal p(t) passes through. For a UWB system, due to a wideband feature of the UWB system, $h_e(t)$ has a significant time focusing effect, that is, when t=0, $h_e(t)$ is a peak; or when t≠0, a value of $h_e(t)$ is close to 0. In this way, it may be approximately considered that a ranging signal (the first ranging signal) generated in this embodiment of this application can enable the equivalent channel that the original ranging signal p(t) passes through to be approximately an additive white Gaussian noise (additive white gaussian noise, AWGN) channel.

It should be understood that additive white Gaussian noise is a noise signal whose power spectral function is a constant (white noise) and whose amplitude complies with Gaussian distribution.

It should be further understood that even if the channel does not meet reciprocity, because a time interval between step S101 and step S105 in this embodiment of this application is very short, a difference between a channel from the second device to the first device and a channel from the first device to the second device is small. Therefore, $h_e(t)$ still has the time focusing effect. In other words, the equivalent channel that the original ranging signal p(t) passes through may also be approximately an additive white Gaussian noise channel.

2. When there is interference, interference behavior may be performed in two phases: (1) an interference signal is used to interfere with the channel measurement signal sent in step S101, that is, interfere with a channel estimation process; and (2) an interference signal is used to interfere with at least the part of the first ranging signal sent in step S 105, that is, interfere with the ranging process.

If the channel estimation process is interfered with, an error occurs in a channel estimation result of the first device, in other words, an accurate estimated value of $h_{21}(t)$ cannot be obtained. In this way, $h_e(t)$ in the foregoing formula (2-6) has no time focusing effect anymore, so that p(t) generates intersymbol interference at a receive end. After sampling is performed on the received signal (the signal y(t) used for ranging) by using the method in this embodiment of this application, due to existence of the intersymbol interference, a correlation operation value of a sample sequence obtained through sampling and the locally stored first sequence is very low (a value of z is small), and consequently integrity check fails.

If the ranging process is interfered with, when there is interference, a mathematical expression of the signal y(t) that is used for ranging and that is received by the second device is shown in the following formula (2-7):

$$y(t) = s(t) \otimes h_{12}(t) + s_a(t) \otimes h_{a2}(t) + n_2(t) \quad \dots\dots\dots\dots\dots\dots\dots\dots (2\text{-}7),$$

where $s_a(t)$ represents an interference signal, and $h_{a2}(t)$ represents a channel impulse response from a transmitter of the interference signal to the second device. According to the integrity check provided in this embodiment of this application, each element in a finally obtained check sequence Y[k] includes both a sampled value of the original ranging signal and a sampled value of the interference signal $s_a(t) \otimes h_{a2}(t)$. Consequently, a correlation operation result z of Y[k] and X[k] is less than the preset threshold, and therefore integrity check fails.

The foregoing content analyzes the reason why the technical solutions provided in this embodiment of this application can implement integrity protection for a ranging signal. The following describes, by using example simulation data, technical effects that can be implemented in this embodiment of this application.

For example, simulation parameters (simulation parameters) are as follows: a 128 bits STS packet with configuration three (128 bits STS packet with configuration three), a 8th order Butterworth pulse (8th order Butterworth pulse), an SYNC preamble 1 (length 31) (SYNC Preamble 1 (length 31)), a sampling frequency 500 MHz (Sampling frequency 500 MHz), a peak pulse repetition frequency (pulse repetition frequency, PRF) 499.2 MHz (a PRF 124.8 MHz

is also supported), a 6 bits DAC (a 2, 4, or 12 bits DAC is also supported), a 802.15.4a ultra-wideband channel model (a walking line of sight mode), a 100 channel implementation, and no frequency offset and perfect timing (No frequency offset and perfect timing).

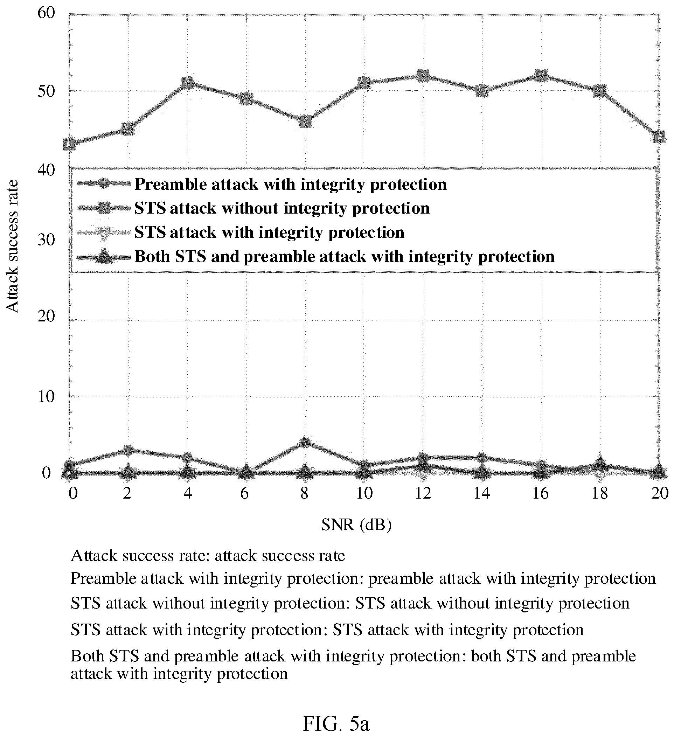

FIG. 5a is a schematic diagram of comparison between an attack success rate with integrity protection and an attack success rate without integrity protection according to an embodiment of this application. As shown in FIG. 5a, a vertical axis represents an attack success rate in a unit of percentage (%), and a horizontal axis represents a signal-to-noise ratio (SNR) in a unit of decibel (dB). It can be learned from FIG. 5a that an attack success rate is approximately 50% without integrity protection. However, an attack success rate is very low and does not exceed 10% when integrity protection is performed (the method provided in this embodiment of this application is used).

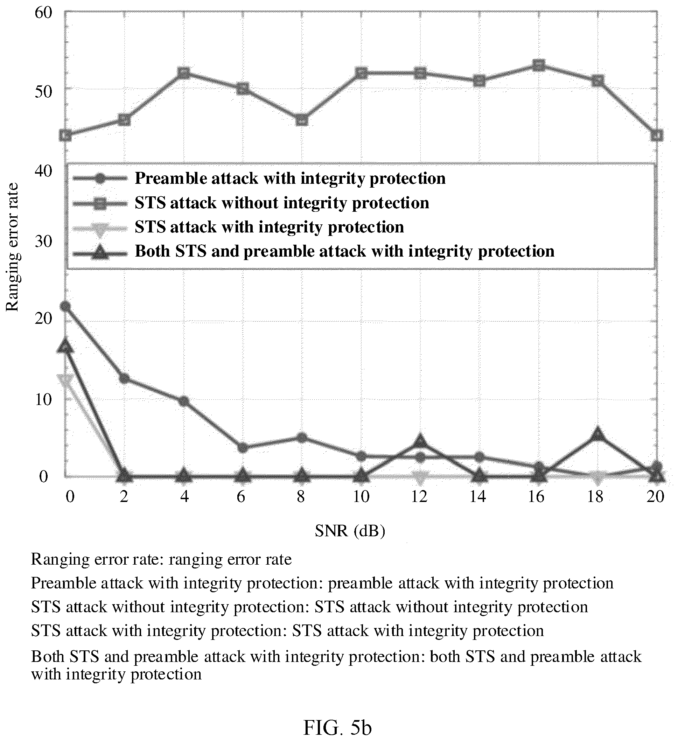

FIG. 5b is a schematic diagram of comparison between a ranging error rate with integrity protection and a ranging error rate without integrity protection according to an embodiment of this application. If a difference between a measured ToA value and actual ToA is greater than 6 ns (a distance error of 1.8 m), a ranging error is identified. As shown in FIG. 5b, a vertical axis represents a ranging error rate in a unit of percentage (%), and a horizontal axis represents a signal-to-noise ratio (SNR) in a unit of decibel (dB). It can be learned from FIG. 5b that, when there is interference, a ranging error rate is significantly reduced by using the method (a ranging signal with integrity protection) provided in this embodiment of this application.

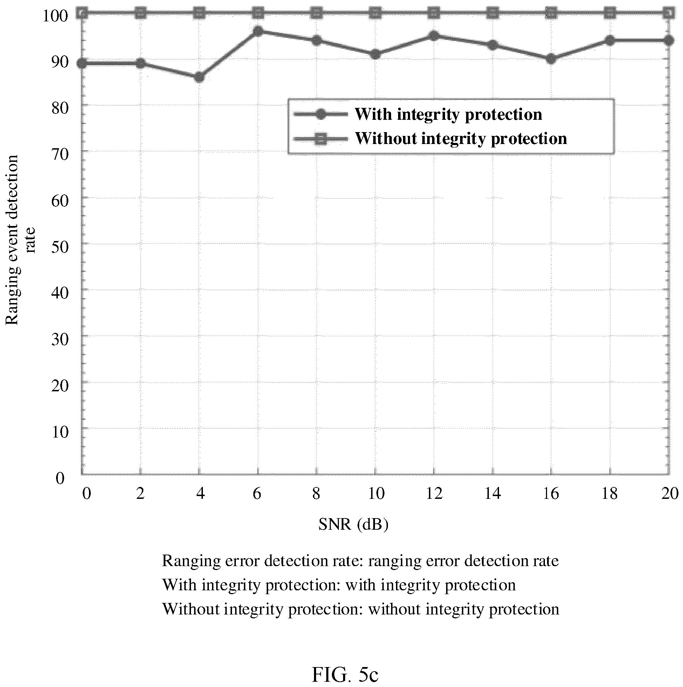

FIG. 5c is a schematic diagram of comparison between a ranging event detection rate with integrity protection and a ranging event detection rate without integrity protection according to an embodiment of this application. If a correlator can output a peak higher than a threshold and integrity check succeeds, a ranging event is detected. As shown in FIG. 5c, a vertical axis represents a ranging event detection rate in a unit of percentage (%), and a horizontal axis represents a signal-to-noise ratio (SNR) in a unit of decibel (dB). It can be learned from FIG. 5c that, when integrity protection is performed (the method provided in this embodiment of this application is used), compared with a case in which integrity protection is not performed, a ranging event detection rate (ranging event detection rate) is not significantly reduced. A slight decrease in the ranging event detection rate is caused by a channel estimation error.

**Embodiment 3**

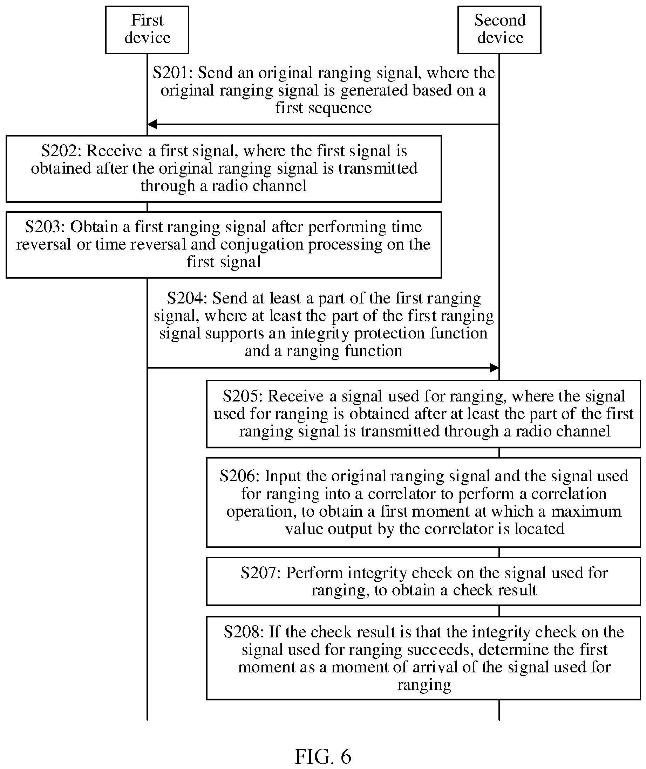

FIG. 6 is a third schematic flowchart of a method for transmitting a ranging signal in a UWB according to an embodiment of this application. Generation and integrity protection of a ranging signal obtained through receiving waveform reversal are mainly described. As shown in FIG. 6, the method for transmitting a ranging signal in a UWB includes but is not limited to the following steps.

S201: A second device sends an original ranging signal, where the original ranging signal is generated based on a first sequence.

Optionally, a manner in which the second device generates the original ranging signal p(t) is shown in the foregoing formula (2-1), and details are not described herein again. The first sequence may be a sequence determined by a first device and the second device through negotiation, a preset or predefined sequence, a disclosed sequence, a sequence defined in a standard, or the like. For example, the first sequence may be an STS.

Optionally, the first device may send a request signal to the second device, where the request signal may be used to request to perform a ranging process (or used to request to start a ranging process). After receiving the request signal, the second device feeds back an acknowledgment signal to the first device, where the acknowledgment signal includes an original ranging waveform.

S202: The first device receives a first signal, where the first signal is obtained after the original ranging signal is transmitted through a radio channel.

Optionally, when a signal is transmitted on a radio channel, the signal is, for example, reflected, diffracted, or scattered by various obstacles, and consequently some changes may occur when a signal sent by a transmit end arrives at a receive end. Therefore, although the second device sends the original ranging signal, the first device receives the first signal. The first signal is obtained after the original ranging signal is transmitted through the radio channel. For ease of description, in this embodiment of this application, the first signal received by the first device is denoted as $y_1(t)$. A mathematical expression of $y_1(t)$ is as follows:

$$y_1(t) = p(t) \otimes h_{21}(t) + n_1(t) \dots\dots\dots\dots\dots\dots\dots\dots\dots\dots\dots\dots\dots (2\text{-}8),$$

where $h_{21}(t)$ represents a channel impulse response from the second device to the first device, and $n_1(t)$ represents receiver noise of the first device.

S203: The first device obtains a first ranging signal after performing time reversal or time reversal and conjugation processing on the first signal.

S204: The first device sends at least a part of the first ranging signal, where at least the part of the first ranging signal supports an integrity protection function and a ranging function.

Optionally, after receiving the first signal, the first device may perform time reversal on the first signal $y_1(t)$ to obtain the first ranging signal. Alternatively, the first device obtains the first ranging signal after performing processing such as power normalization, time reversal, and conjugation on the first signal $y_1(t)$. The first ranging signal has or supports the integrity protection function and the ranging function. In other words, the first ranging signal supports integrity check and ranging. For ease of description, the first ranging signal is denoted as s(t). For example, the first ranging signal is shown in the following formula (2-9):

$$s(t) = \alpha y_1'(t) = \alpha [\, p'(-t) \otimes h_{21}'(-t) + n_1'(-t)\,] \qquad \dots\dots\dots\dots\dots\dots\dots\dots\dots\dots\dots\dots(2\text{-}9),$$

where

$\alpha$ represents a power normalization factor and is used to perform power normalization processing on the first signal $y_1(t)$. $y_1'(t)$ indicates that $y_1(t)$ is conjugated. The first device may use the first ranging signal s(t) as a signal having the integrity protection function and the ranging function, and send the signal to the second device.

It can be learned from the foregoing formula (2-9) that duration of the first ranging signal is longer than duration of the original ranging signal. In other words, a length of the first ranging signal is greater than a length of the original ranging signal. Therefore, for the first ranging signal, the first device has two processing manners. In an implementation, the first device may truncate the first ranging signal, to obtain a part of the first ranging signal and send the part of the first ranging signal. For example, a truncation manner is reserving a trailer of the first ranging signal, and the trailer and the original ranging signal p(t) are equal in length. In another implementation, the first device may directly send the first ranging signal without truncating the first ranging signal. At least the part of the first ranging signal supports the integrity protection function and the ranging function.

S205: The second device receives a signal used for ranging, where the signal used for ranging is obtained after at least the part of the first ranging signal is transmitted through a radio channel.

S206: The second device inputs the original ranging signal and the signal used for ranging into a correlator to perform a correlation operation, to obtain a first moment of a maximum value output by the correlator.

Optionally, for implementations of step S205 and step S206 in this embodiment of this application, refer to the implementations of step S106 and step S107 in the foregoing Embodiment 2. Details are not described herein again.

S207: The second device performs integrity check on the signal used for ranging, to obtain a check result.

Optionally, to check whether a ranging process is interfered with by an interference signal (whether the signal that is used for ranging and that is received by the second device is interfered with by an interference signal), the second device may obtain a real part of the signal (denoted as y(t)) used for ranging, and then perform equal-interval sampling, to obtain a sample sequence. A sampling start moment is the first moment (denoted as $t_2$), and a sampling interval is T (an interval between adjacent elements in the first sequence). A length of the sample sequence is equal to a total length of the first sequence. For example, if a length of the STS is 128 bits, the length of the sample sequence (or a total quantity of samples) is also 128 bits. In an implementation, the second device may directly use the sample sequence as a check sequence (denoted as Y[k]). In another implementation, after obtaining the sample sequence, the second device generates a check sequence (denoted as Y[k]) based on a polarity of each sample. If a polarity of a sample in the sample sequence is positive, a corresponding element in the check sequence is 1; otherwise, if a polarity of a sample in the sample sequence is negative, a corresponding element in the check sequence is -1. The second device may perform a correlation operation on the check sequence (Y[k]) and X[-k] obtained after time reversal is performed on the locally stored first sequence X[k], to obtain a correlation operation result (denoted as z). The correlation operation result z is represented as follows:

$$z = \sum_{k=1}^{N} X[-k]Y[k] \dots\dots\dots\dots\dots\dots\dots\dots\dots\dots\dots\dots\dots\dots\dots\dots\dots\dots\dots(2\text{-}10),$$

where

N represents a length of the check sequence Y[k].

The second device may compare the correlation operation result z with a preset threshold, to obtain a check result. When the correlation operation result z is greater than or equal to the preset threshold, the check result is that the integrity check on the signal used for ranging succeeds, that is, the ranging process is not interfered with by an interference signal. When the correlation operation result z is less than the preset threshold, the check result is that the integrity check on the signal used for ranging fails, that is, the ranging process is interfered with by an interference signal. It should be understood that when the correlation operation result z is equal to the preset threshold, whether the check result is that the integrity check succeeds may be determined based on an actual case. This is not limited in this embodiment of this application.

S208: If the check result is that the integrity check on the signal used for ranging succeeds, the second device determines the first moment as a moment of arrival of the signal used for ranging.

Optionally, if the check result is that the integrity check on the signal used for ranging succeeds, it indicates that the ranging process is not interfered with by an interference signal. In this case, the second device may use the first moment ($t_2$) as the moment of arrival of the signal used for ranging. If the check result is that the integrity check on the signal used for ranging fails, it indicates that the ranging process is interfered with by an interference signal. In this case, the second device may notify the first device to, for example, send a new ranging signal, resend the ranging signal at an interval of a period of time, or perform no operation.

In this embodiment of this application, the first device directly performs reversal and conjugation after performing power normalization on the received first signal, to obtain the signal (the first ranging signal) having the integrity protection and ranging functions, and sends the signal. The second device completes time of flight (time of flight, ToF) measurement based on the received signal by using a correlation operation, and determines, through sampling, determining, and a correlation operation, whether the ranging process is interfered with, to implement integrity protection for the ranging signal. Therefore, a receive end can detect whether a ranging process is interfered with, thereby providing integrity protection for a ranging signal without compromising ranging performance of a system. In addition, in this embodiment of this application, channel estimation is not required, so that ranging performance is not affected by a channel estimation error.

For two cases in which interference exists and no interference exists in a ranging process, the following separately analyzes a reason why the technical solutions provided in Embodiment 3 of this application can enable a receive end to have a capability of detecting whether a ranging process is interfered with, namely, a reason why the technical solutions provided in Embodiment 2 of this application can implement integrity protection for a ranging signal.

1. When there is no interference, a mathematical expression of the signal y(t) that is used for ranging and that is received by the second device is shown in the foregoing formula (2-4). It is assumed that a channel meets reciprocity, that is, $h_{12}(t)=h_{21}(t)$. In other words, a channel impulse response from the first device to the second device is equal to the channel impulse response from the second device to the first device. The following formula (2-11) may be obtained by substituting the formula (2-9) into the formula (2-4):

$$y(t) = \alpha p'(-t) \otimes h_{12}(t) \otimes h'_{12}(-t) + n_e(t) \dots\dots\dots\dots\dots\dots\dots\dots\dots(2\text{-}11),$$

where $n_e(t)$ represents equivalent receiver noise of the second device. $n_e(t)$ is represented as follows:

$$n_e(t) = \alpha n'_1(-t) \otimes h_{12}(t) + n_2(t) \dots\dots\dots\dots\dots\dots\dots\dots\dots(2\text{-}12).$$

For ease of description, the following expression is introduced:

$$h_e(t) = \alpha h_{12}(t) \otimes h'_{12}(-t) \qquad \dots\dots\dots\dots\dots\dots\dots\dots\dots(2\text{-}13),$$

where
$h_e(t)$ represents a channel impulse response (CIR) of an equivalent channel that p'(-t) obtained after time reversal and conjugation are performed on the original ranging signal p(t) passes through. For a UWB system, due to a wideband feature of the UWB system, $h_e(t)$ has a significant time focusing effect, that is, when t=0, $h_e(t)$ is a peak; or when t≠0, a value of $h_e(t)$ is close to 0. In this way, it may be approximately considered that a ranging signal (the first ranging signal) generated in this embodiment of this application can enable the equivalent channel that p'(-t) passes through to be approximately an additive white Gaussian noise (AWGN) channel.

It should be understood that even if the channel does not meet reciprocity, because a time interval between step S201 and step S204 in this embodiment of this application is very short, a difference between a channel from the second device to the first device and a channel from the first device to the second device is small. Therefore, $h_e(t)$ still has the time focusing effect. In other words, the equivalent channel that p'(-t) passes through may also be approximately an additive white Gaussian noise channel.

2. When there is interference, interference behavior may be performed in two phases:

(1) an interference signal is used to interfere with the original ranging signal sent in step S201; and
(2) an interference signal is used to interfere with at least the part of the first ranging signal sent in step S204, that is, interfere with the ranging process.

If the original ranging signal is interfered with, an interference signal exists in the first signal $y_1(t)$ received by the first device. A signal obtained after the first device performs processing (power normalization, time reversal, and conjugation) on $y_1(t)$ is sent, and the interference signal appears in the signal $y(t)$ that is used for ranging and that is received by the second device. In this case, according to the integrity check provided in this embodiment of this application, each element in a finally obtained check sequence Y[k] includes both a sampled value of p'(-t) and a sampled value of the interference signal. Consequently, a correlation operation result z of Y[k] and X[-k] is less than the preset threshold, and therefore integrity check fails.

If the ranging process is interfered with, when there is interference, a mathematical expression of the signal y(t) that is used for ranging and that is received by the second device is shown in the foregoing formula (2-7). According to the integrity check provided in this embodiment of this application, each element in a finally obtained check sequence Y[k] includes both a sampled value of p'(-t) and a sampled value of the interference signal $s_a(t) \otimes h_{a2}(t)$. Consequently, a correlation operation result z of Y[k] and X[-k] is less than the preset threshold, and therefore integrity check fails.

**Embodiment 4**

Embodiment 4 of this application may be implemented together with any one of the foregoing Embodiment 1 to Embodiment 3, or may be separately implemented. This is not limited in this embodiment of this application.

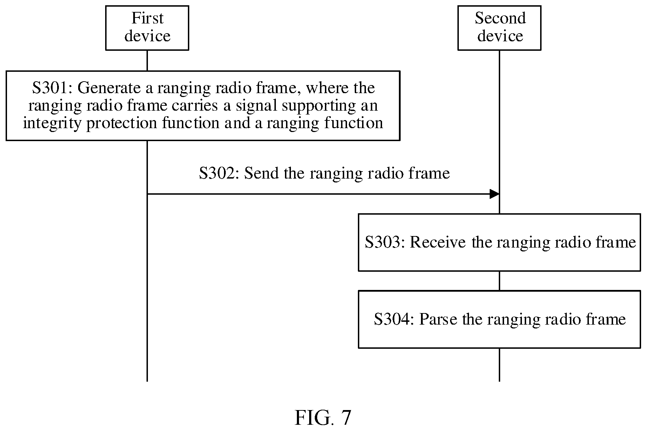

FIG. 7 is a fourth schematic flowchart of a method for transmitting a ranging signal in a UWB according to an embodiment of this application. A radio frame with an integrity protection function and a ranging function is mainly described. As shown in FIG. 7, the method for transmitting a ranging signal in a UWB includes but is not limited to the following steps.

S301: A first device generates a ranging radio frame, where the ranging radio frame carries a signal supporting an integrity protection function and a ranging function.

S302: The first device sends the ranging radio frame.

Optionally, for ease of description, the signal that is carried in the ranging radio frame and that supports the integrity protection function and the ranging function is denoted as an STS+. The STS+ may be at least a part of a first ranging signal. For a specific generation manner, refer to the corresponding descriptions in the foregoing Embodiment 2 or the corresponding descriptions in the foregoing Embodiment 3. Details are not described herein again. A physical layer frame format in 802.15.4z may be reused as a frame format of the ranging radio frame.

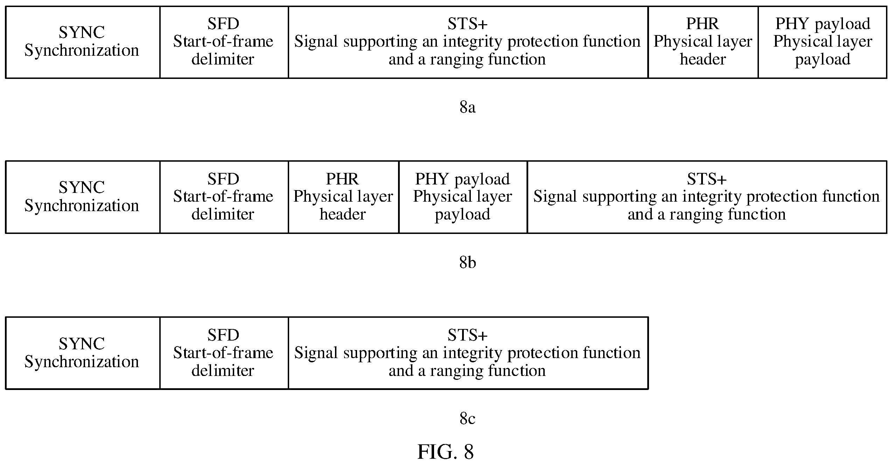

FIG. 8 is a schematic diagram of a frame format of a ranging radio frame according to an embodiment of this application. 8a, 8b, and 8c in FIG. 8 show formats of three types of ranging radio frames. As shown in FIG. 8, the ranging radio frame includes one or more of the following: a synchronization (synchronization, SYNC) field, a start-of-frame delimiter (start-of-frame delimiter, SFD), an STS+ (a signal supporting an integrity protection function and a ranging function), a physical layer header (physical layer header, PHR) field, and a physical layer payload (physical layer payload).

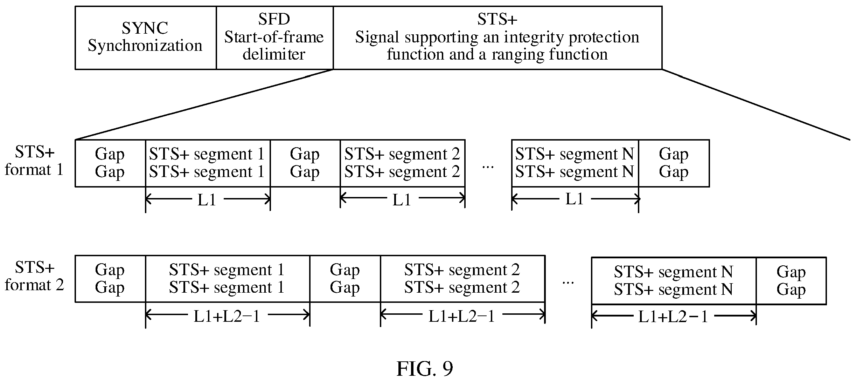

The STS+ (the signal supporting the integrity protection function and the ranging function) has two formats: a format 1 and a format 2. FIG. 9 is a schematic diagram of a frame format of an STS+ in a ranging radio frame according to an embodiment of this application. It can be learned from the foregoing Embodiment 2 and Embodiment 3 that an STS+ segment (STS+ segment) is obtained by performing convolution on an STS segment and another signal. Therefore, the STS+ segment is longer than the STS segment. In view of this, this embodiment of this application provides two processing methods: truncating the STS+ segment, so that the STS+ segment and the STS segment are equal in length, namely, a format 1; and skipping truncating the STS+ segment, namely, a format 2. For the format 1, a truncation method is deleting a header of an STS+ signal obtained after convolution, and reserving a trailer that is of the signal and whose length is equal to the length of the STS segment. As shown in FIG. 9, an STS+ segment in the format 2 is longer than an STS+ segment in the format 1, a length of the STS+ segment in the format 2 is L1+L2-1, and a length of the STS+ segment in the format 1 is L1. L1 is a length of an STS, and L2 is a length of a channel impulse response. However, regardless of a format, a receive end uses same processing. In FIG. 9, a frame format shown in 8a in FIG. 8 is used as an example. The two STS+ formats provided in this embodiment of this application may be applied to any frame format in FIG. 8.

Optionally, to have an integrity protection function without affecting ranging performance, a pulse repetition frequency (pulse repetition frequency, PRF) of the STS+ (the signal supporting the integrity protection function and the ranging function) may be higher than a PRF of an STS (a signal supporting only the ranging function). Therefore, for the signal supporting both the integrity protection function and the ranging function, a new PRF mode may be added, including but not limited to 249.6 MHz and 499.2 MHz.

S303: The second device receives the ranging radio frame.

S304: The second device parses the ranging radio frame.

Optionally, after receiving the ranging radio frame, the second device parses the ranging radio frame to obtain the signal that supports the integrity protection function and the ranging function and that is carried in the ranging radio frame.

This embodiment of this application provides a radio frame having the integrity protection function and the ranging function, to help implement integrity protection for a ranging signal.

**Embodiment 5**

Embodiment 5 of this application may be implemented together with any one or more of the foregoing Embodiment 1 to Embodiment 4, or may be separately implemented. This is not limited in this embodiment of this application.

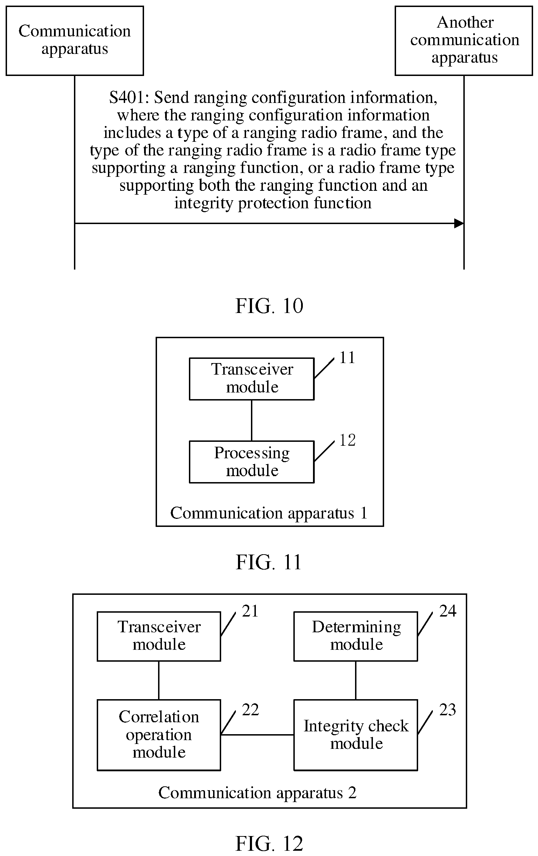

FIG. 10 is a schematic flowchart of a method for communicating ranging configuration information according to an embodiment of this application. As shown in FIG. 10, the method for communicating ranging configuration information includes but is not limited to the following steps:
S401: A communication apparatus sends ranging configuration information, where the ranging configuration information includes a type of a ranging radio frame, and the type of the ranging radio frame is a radio frame type supporting a ranging function, or a radio frame type supporting both the ranging function and an integrity protection function.
Correspondingly, another communication apparatus receives the ranging configuration information.
Optionally, before a ranging process, two ranging parties may negotiate about some configuration information in the ranging process. In an implementation, the communication apparatus sends the ranging configuration information to a second device. The ranging configuration information may include the type of the ranging radio frame. The type of the ranging radio frame is the radio frame type supporting the ranging function, or the radio frame type supporting both the ranging function and the integrity protection function. In other words, the ranging radio frame is a common ranging radio frame or a ranging radio frame having both the ranging function and the integrity protection function. In other words, the ranging configuration information includes whether a ranging signal sent in a ranging process supports the integrity protection function.
Optionally, the ranging configuration information may further include an STS configuration format, or a format of the ranging radio frame. The common ranging radio frame (a radio frame supporting only the ranging function) has three STS configuration formats: an STS configuration 1 to an STS configuration 3 (for specific formats, refer to descriptions in the 802.15.4z standard. Details are not described herein). A format of the ranging radio frame having both the ranging function and the integrity protection function is shown in FIG. 8.
Optionally, the ranging configuration information may further include an STS+ format (a truncated format or a non-truncated format), namely, a length of a ranging signal in a ranging process. For the non-truncated format, the length of the ranging signal is greater than a length of an original ranging signal (a signal generated by using the foregoing formula (2-1)). For the truncated format, the length of the ranging signal is equal to the length of the original ranging signal.
Optionally, because a PRF of the signal having both the integrity protection function and the ranging function may be higher than a PRF of the signal supporting only the ranging function, a PRF mode further needs to be configured. Therefore, the ranging configuration information may further include a PRF mode (including but not limited to 124.8 MHz, 249.6 MHz, and 499.2 MHz).
Optionally, the ranging configuration information may be carried in a ranging channel and preamble selection information element (Ranging Channel and Preamble Selection Information Element, RCPCS IE). For example, an existing field of the RCPCS IE is extended to carry the ranging configuration information. Alternatively, a new information element may be defined to carry the ranging configuration information. For example, the new information element may be referred to as a ranging frame configuration selection information element (Ranging Frame Configuration Selection Information Element, RFCS IE), and the ranging configuration information is carried in the newly defined RFCS IE.
Optionally, the ranging configuration information may be carried in a ranging reply time negotiation information element (Ranging Reply Time Negotiation Information Element, RRTN IE). For example, an existing field of the RRTN IE is extended to carry the ranging configuration information. Alternatively, a new information element may be defined. For example, the new information element may be referred to as a ranging frame configuration selection information element (Ranging Frame Configuration Selection Information Element, RFCS IE), and the ranging configuration information is carried in the newly defined RFCS IE.
Optionally, after receiving the ranging configuration information, the another communication apparatus reports the ranging configuration information to an upper layer, and feeds back an acknowledgment (Acknowledgement, ACK) signal frame to the communication apparatus. In a subsequent ranging process, the two ranging parties complete ranging based on the foregoing agreed ranging frame.
This embodiment of this application provides a configuration information negotiation manner for a newly added signal or radio frame supporting both the ranging function and the integrity protection function, to lay a foundation for a subsequent ranging process.
The foregoing content describes in detail the method provided in the embodiments of this application. For ease of implementing the foregoing solutions in the embodiments of this application, the embodiments of this application further provide a corresponding apparatus or device.

In the embodiments of this application, the first device and the second device may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software functional module. It should be noted that, in the embodiments of this application, module division is an example and is merely logical function division. In actual implementation, another division manner may be used. The following describes in detail a communication apparatus in the embodiments of this application with reference to FIG. 11 to FIG. 13. The communication apparatus is a first device or a second device. Further, the communication apparatus may be an apparatus in the first device, or the communication apparatus is an apparatus in the second device.

When an integrated unit is used, FIG. 11 is a schematic diagram of a structure of a communication apparatus 1 according to an embodiment of this application. As shown in FIG. 11, the communication apparatus 1 includes a transceiver module 11 and a processing module 12.

In a possible design, the transceiver module 11 is configured to receive a first signal; and the processing module 12 is configured to preprocess the first signal to obtain a second signal, where the preprocessing includes channel estimation or power normalization, where the processing module 12 is further configured to generate a first ranging signal based on at least the second signal, where the first ranging signal meets a signal obtained after convolution processing is performed on an original ranging signal and a signal obtained after time reversal is or time reversal and conjugation processing are performed on the second signal, or the first ranging signal meets a signal obtained after time reversal is or time reversal and conjugation processing are performed on the second signal; and the transceiver module 11 is further configured to send at least a part of the first ranging signal, where at least the part of the first ranging signal supports an integrity protection function and a ranging function.

It should be understood that the communication apparatus 1 may correspondingly perform any one of the foregoing Embodiments 1 to 3, and the foregoing operations or functions of the units in the communication apparatus 1 are respectively used to implement the corresponding operations of the first device in any one of the foregoing Embodiments 1 to 3. For brevity, details are not described herein again.

In another design, the processing module 12 is configured to generate a ranging radio frame, where the ranging radio frame carries a signal supporting an integrity protection function and a ranging function; and the transceiver module 11 is configured to send the ranging radio frame.

It should be understood that the communication apparatus 1 may correspondingly perform the foregoing Embodiment 4, and the foregoing operations or functions of the units in the communication apparatus 1 are respectively used to implement the corresponding operations of the first device in the foregoing Embodiment 4. For brevity, details are not described herein again.

In still another design, the transceiver module 11 is configured to send ranging configuration information, or receive ranging configuration information, where the ranging configuration information includes a type of a ranging radio frame, and the type of the ranging radio frame is a radio frame type supporting a ranging function, or a radio frame type supporting both the ranging function and an integrity protection function. Optionally, the processing module 12 is configured to generate the ranging configuration information.

It should be understood that the communication apparatus 1 may correspondingly perform the foregoing Embodiment 5, and the foregoing operations or functions of the units in the communication apparatus 1 are respectively used to implement the corresponding operations of the first device in the foregoing Embodiment 5. For brevity, details are not described herein again.

FIG. 12 is a schematic diagram of a structure of a communication apparatus 2 according to an embodiment of this application. As shown in FIG. 12, the communication apparatus 2 includes a transceiver module 21, a correlation operation module 22, an integrity check module 23, and a determining module 24.

In a design, the transceiver module 21 is configured to send a signal, where the signal is used to generate a first ranging signal, where the transceiver module 21 is further configured to receive a signal used for ranging, where the signal used for ranging is obtained after at least a part of the first ranging signal is transmitted through a radio channel, and at least the part of the first ranging signal supports an integrity protection function and a ranging function; the correlation operation module 22 is configured to input an original ranging signal and the signal used for ranging into a correlator to perform a correlation operation, to obtain a first moment of a maximum value output by the correlator, where the original ranging signal is generated based on a first sequence; the integrity check module 23 is configured to perform integrity check on the signal used for ranging, to obtain a check result, where when a correlation operation result obtained by performing a correlation operation on a second sequence and a check sequence is greater than or equal to a preset threshold, the check result is that the integrity check on the signal used for ranging succeeds; or when a correlation operation result obtained by performing a correlation operation on the second sequence and the check sequence is less than the preset threshold, the check result is that the integrity check on the signal used for ranging fails, where the second sequence is the first sequence, or the second sequence is a sequence obtained after time reversal processing is performed on the first sequence; and the check sequence is obtained by performing equal-interval sampling after a real part of the signal used for ranging is obtained, a start moment of the equal-interval sampling is the first moment, and a length of the check sequence is equal to a length of the first sequence; and the determining module 24 is configured to: when the check result is that the integrity check on the signal used for ranging succeeds, determine the first moment as a moment of arrival of the signal used for ranging.

The correlation operation module 22, the integrity check module 23, and the determining module 24 may be integrated into one module, for example, a processing module.

It should be understood that the communication apparatus 2 may correspondingly perform any one of the foregoing Embodiments 1 to 3, and the foregoing operations or functions of the units in the communication apparatus 2 are respectively used to implement the corresponding operations of the second device in any one of the foregoing Embodiments 1 to 3. For brevity, details are not described herein again.

The foregoing describes the first device and the second device in the embodiments of this application. The following describes possible product forms of the first device and the second device. It should be understood that, any product that is in any form and that has the functions of the first device in FIG. 11 and any product that is in any form and that has the functions of the second device in FIG. 12 fall within the protection scope of the embodiments of this application. It should be further understood that the following description is merely an example, and the product forms of the first device and the second device in the embodiments of this application are not limited thereto.

In a possible product form, the first device and the second device in the embodiments of this application may be implemented by using a general bus architecture.

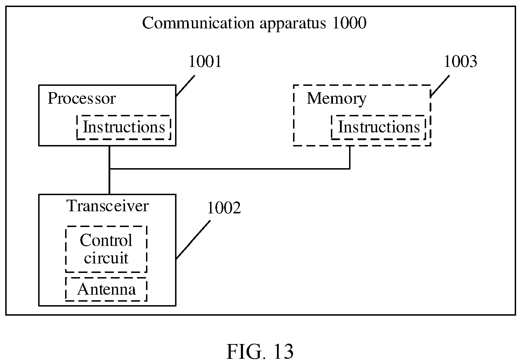

For ease of description, FIG. 13 is a schematic diagram of a structure of a communication apparatus 1000 according to an embodiment of this application. The communication apparatus 1000 may be a first device, a second device, or a chip in the first device or the second device. FIG. 13 shows only main components of the communication apparatus 1000. In addition to a processor 1001 and a transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and the data. The transceiver 1002 may include a control circuit and an antenna. The control circuit is mainly configured to: perform conversion between a baseband signal and a radio frequency signal, and process a radio frequency signal. The antenna is mainly configured to send or receive a radio frequency signal in a form of an electromagnetic wave. The input/output apparatus, such as a touchscreen, a display screen, or a keyboard, is mainly configured to: receive data input by a user, and output data to the user.

After the communication apparatus is powered on, the processor 1001 may read the software program in the memory 1003, interpret and execute instructions of the software program, and process data of the software program. When data needs to be wirelessly sent, the processor 1001 performs baseband processing on the to-be-sent data, and then outputs a baseband signal to a radio frequency circuit. The radio frequency circuit performs radio frequency processing on the baseband signal, and then sends a radio frequency signal in a form of an electromagnetic wave by using the antenna. When data is sent to the communication apparatus, the radio frequency circuit receives a radio frequency signal by using the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be independent of the communication apparatus and remotely disposed.

The processor 1001, the transceiver 1002, and the memory 1003 may be connected through a communication bus.

In a design, the communication apparatus 1000 may be configured to perform the functions of the first device in the foregoing Embodiment 1. The processor 1001 may be configured to perform step S3 and step S4 in FIG. 3, and/or configured to perform another process of the technology described in this specification. The transceiver 1002 may be configured to perform step S2 and step S5 in FIG. 3, and/or configured to perform another process of the technology described in this specification.

In another design, the communication apparatus 1000 may be configured to perform the functions of the second device in the foregoing Embodiment 1. The processor 1001 may be configured to perform step S7 to step S9 in FIG. 3, and/or configured to perform another process of the technology described in this specification. The transceiver 1002 may be configured to perform step S1 and step S6 in FIG. 3, and/or configured to perform another process of the technology described in this specification.

In a design, the communication apparatus 1000 may be configured to perform the functions of the first device in the foregoing Embodiment 2. The processor 1001 may be configured to perform step S102 to step S104 in FIG. 4, and/or configured to perform another process of the technology described in this specification. The transceiver 1002 may be configured to perform step S105 in FIG. 4, and/or configured to perform another process of the technology described in this specification.

In another design, the communication apparatus 1000 may be configured to perform the functions of the second device in the foregoing Embodiment 2. The processor 1001 may be configured to perform step S107 to step S109 in FIG. 4, and/or configured to perform another process of the technology described in this specification. The transceiver 1002 may be configured to perform step S 101 and step S 106 in FIG. 4, and/or configured to perform another process of the technology described in this specification.

In a design, the communication apparatus 1000 may be configured to perform the functions of the first device in the foregoing Embodiment 3. The processor 1001 may be configured to perform step S203 in FIG. 6, and/or configured to perform another process of the technology described in this specification. The transceiver 1002 may be configured to perform step S202 and step S204 in FIG. 6, and/or configured to perform another process of the technology described in this specification.

In another design, the communication apparatus 1000 may be configured to perform the functions of the second device in the foregoing Embodiment 3. The processor 1001 may be configured to perform step S206 to step S208 in FIG. 6, and/or configured to perform another process of the technology described in this specification. The transceiver 1002 may be configured to perform step S201 and step S205 in FIG. 6, and/or configured to perform another process of the technology described in this specification.

In a design, the communication apparatus 1000 may be configured to perform the functions of the first device in the foregoing Embodiment 4. The processor 1001 may be configured to perform step S301 in FIG. 7, and/or configured to perform another process of the technology described in this specification. The transceiver 1002 may be configured to perform step S302 in FIG. 7, and/or configured to perform another process of the technology described in this specification.

In another design, the communication apparatus 1000 may be configured to perform the functions of the second device in the foregoing Embodiment 4. The processor 1001 may be configured to perform step S304 in FIG. 7, and/or configured to perform another process of the technology described in this specification. The transceiver 1002 may be configured to perform step S303 in FIG. 7, and/or configured to perform another process of the technology described in this specification.

In a design, the communication apparatus 1000 may be configured to perform the functions of the first device in the foregoing Embodiment 5. The processor 1001 may be configured to generate the ranging configuration information in FIG. 10, and/or configured to perform another process of the technology described in this specification. The transceiver 1002 may be configured to perform step S401 in FIG. 10, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read or write code/data. Alternatively, the transceiver circuit, the interface, or the interface circuit may be configured to transmit or transfer a signal.

In any one of the foregoing designs, the processor 1001 may store instructions. The instructions may be a computer program. The computer program runs on the processor 1001, to enable the communication apparatus 1000 to perform the method described in any one of the foregoing method embodiments. The computer program may be fixed in the processor 1001. In this case, the processor 1001 may be implemented by hardware.

In an implementation, the communication apparatus 1000 may include a circuit. The circuit may implement a sending, receiving, or communication function in the foregoing method embodiments. The processor and the transceiver described in the embodiments of this application may be implemented on an integrated circuit (integrated circuit, IC), an analog IC, a radio frequency integrated circuit (radio frequency integrated circuit, RFIC), a hybrid signal IC, an application-specific integrated circuit (application-specific integrated circuit, ASIC), a printed circuit board (printed circuit board, PCB), an electronic device, or the like. The processor and the transceiver may be alternatively manufactured by using various IC technologies, for example, a complementary metal oxide semiconductor (complementary metal oxide semiconductor, CMOS), an N-channel metal oxide semiconductor (N-channel metal oxide semiconductor, NMOS), a p-channel metal oxide semiconductor (p-channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in the embodiments of this application is not limited thereto, and a structure of the communication apparatus may not be limited to that in FIG. 13. The communication apparatus may be an independent device or may be a part of a larger device. For example, the communication apparatus may be:

(1) an independent integrated circuit IC, chip, chip system, or subsystem;
(2) a set having one or more ICs, where optionally, the IC set may further include a storage component configured to store data and a computer program;
(3) an ASIC, such as a modem (Modem);

(4) a module that can be embedded in another device;

(5) a receiver, a terminal, an intelligent terminal, a cellular phone, a wireless device, a handheld device, a mobile unit, a vehicle-mounted device, a network device, a cloud device, an artificial intelligence device, or the like; or

(6) others.

In a possible product form, the first device and the second device in the embodiments of this application may be implemented by general-purpose processors.

A general-purpose processor for implementing the first device includes a processing circuit and an input/output interface that is internally connected to and communicates with the processing circuit.

In a design, the general-purpose processor may be configured to perform the functions of the first device in the foregoing Embodiment 1. Specifically, the processing circuit may be configured to perform step S3 and step S4 in FIG. 3, and/or configured to perform another process of the technology described in this specification. The input/output interface may be configured to perform step S2 and step S5 in FIG. 3, and/or configured to perform another process of the technology described in this specification.

In a design, the general-purpose processor may be configured to perform the functions of the first device in the foregoing Embodiment 2. Specifically, the processing circuit may be configured to perform step S102 to step S104 in FIG. 4, and/or configured to perform another process of the technology described in this specification. The input/output interface may be configured to perform step S105 in FIG. 4, and/or configured to perform another process of the technology described in this specification.

In a design, the general-purpose processor may be configured to perform the functions of the first device in the foregoing Embodiment 3. Specifically, the processing circuit may be configured to perform step S203 in FIG. 6, and/or configured to perform another process of the technology described in this specification. The input/output interface may be configured to perform step S202 and step S204 in FIG. 6, and/or configured to perform another process of the technology described in this specification.

In a design, the general-purpose processor may be configured to perform the functions of the first device in the foregoing Embodiment 4. Specifically, the processing circuit may be configured to perform step S301 in FIG. 7, and/or configured to perform another process of the technology described in this specification. The input/output interface may be configured to perform step S302 in FIG. 7, and/or configured to perform another process of the technology described in this specification.

In a design, the general-purpose processor may be configured to perform the functions of the first device in the foregoing Embodiment 5. Specifically, the processing circuit may be configured to generate the ranging configuration information in FIG. 10, and/or configured to perform another process of the technology described in this specification. The input/output interface may be configured to perform step S401 in FIG. 10, and/or configured to perform another process of the technology described in this specification.

A general-purpose processor for implementing the second device includes a processing circuit and an input/output interface that is internally connected to and communicates with the processing circuit.

In a design, the general-purpose processor may be configured to perform the functions of the second device in the foregoing Embodiment 1. Specifically, the processing circuit may be configured to perform step S7 to step S9 in FIG. 3, and/or configured to perform another process of the technology described in this specification. The input/output interface may be configured to perform step S1 and step S6 in FIG. 3, and/or configured to perform another process of the technology described in this specification.

In a design, the general-purpose processor may be configured to perform the functions of the second device in the foregoing Embodiment 2. Specifically, the processing circuit may be configured to perform step S107 to step S109 in FIG. 4, and/or configured to perform another process of the technology described in this specification. The input/output interface may be configured to perform step S101 and step S106 in FIG. 4, and/or configured to perform another process of the technology described in this specification.

In a design, the general-purpose processor may be configured to perform the functions of the second device in the foregoing Embodiment 3. Specifically, the processing circuit may be configured to perform step S206 to step S208 in FIG. 6, and/or configured to perform another process of the technology described in this specification. The input/output interface may be configured to perform step S201 and step S205 in FIG. 6, and/or configured to perform another process of the technology described in this specification.

In a design, the general-purpose processor may be configured to perform the functions of the second device in the foregoing Embodiment 4. Specifically, the processing circuit may be configured to perform step S304 in FIG. 7, and/or configured to perform another process of the technology described in this specification. The input/output interface may be configured to perform step S303 in FIG. 7, and/or configured to perform another process of the technology described in this specification.

It should be understood that the foregoing communication apparatuses in various product forms have any function of the first device or the second device in any one of the foregoing embodiments. Details are not described herein again.

An embodiment of this application further provides a computer-readable storage medium. The computer-readable storage medium stores computer program code. When the foregoing processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The communication apparatus may exist in a product form of a chip. A structure of the communication apparatus includes a processor and an interface circuit. The processor is configured to communicate with another apparatus by using the interface circuit, to enable the communication apparatus to perform the method in any one of the foregoing embodiments.

An embodiment of this application further provides a wireless communication system, including a first device and a second device. The first device and the second device may perform the method in any one of the foregoing embodiments.

Method or algorithm steps described in combination with the content disclosed in this application may be implemented by hardware, or may be implemented by a processor by executing software instructions. The software instructions may include corresponding software modules. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. An example storage medium is coupled to a processor, so that the processor can read information from the storage medium and can write information into the storage medium. Certainly, the storage medium may be alternatively a component of the processor. The processor and the storage medium may be disposed in an ASIC. In addition, the ASIC may be located in a core network interface device. Certainly, the processor and the storage medium may alternatively exist in the core network interface device as discrete components.

A person skilled in the art should be aware that in the foregoing one or more examples, the functions described in this application may be implemented by hardware, software, firmware, or any combination thereof. When the functions are implemented by software, the functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from a place to another place. The storage medium may be any available medium accessible to a general-purpose or dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

A person of ordinary skill in the art may understand that all or some of the processes of the methods in the foregoing embodiments may be implemented by a computer program by instructing relevant hardware. The program may be stored in a computer-readable storage medium. When the program is executed, the processes of the foregoing method embodiments are performed. The foregoing storage medium includes any medium that can store program code, such as a ROM, a random access memory RAM, a magnetic disk, or an optical disc.

**Claims**

1. A method for transmitting a ranging signal in an ultra-wideband, comprising:

   receiving, by a communication apparatus, a first signal;
   preprocessing, by the communication apparatus, the first signal to obtain a second signal, wherein the preprocessing comprises channel estimation or power normalization;
   generating, by the communication apparatus, a first ranging signal based on at least the second signal, wherein the first ranging signal meets a signal obtained after convolution processing is performed on an original ranging signal and a signal obtained after time reversal is or time reversal and conjugation processing are performed on the second signal, or the first ranging signal meets a signal obtained after time reversal is or time reversal and conjugation processing are performed on the second signal; and
   sending, by the communication apparatus, at least a part of the first ranging signal, wherein at least the part of the first ranging signal supports an integrity protection function and a ranging function.

**2.** The method according to claim 1, wherein the first signal comprises pilot information, the preprocessing comprises channel estimation, and the second signal is a first channel impulse response from a communication apparatus to the communication apparatus; and

the generating a first ranging signal comprises:

obtaining, by the communication apparatus, a second channel impulse response after performing first processing on the first channel impulse response, wherein the first processing comprises time reversal or time reversal and conjugation processing; and

performing, by the communication apparatus, convolution processing based on the second channel impulse response and the original ranging signal.

**3.** The method according to claim 2, wherein the performing convolution processing based on the second channel impulse response and the original ranging signal comprises:
performing convolution processing on the original ranging signal and a response obtained after normalization processing is performed on the second channel impulse response.

**4.** The method according to claim 1, wherein the first signal is obtained after the original ranging signal is transmitted through a radio channel, and the preprocessing comprises power normalization; and
the generating a first ranging signal comprises:
obtaining, by the communication apparatus, the first ranging signal after performing time reversal or time reversal and conjugation processing on the second signal.

**5.** The method according to any one of claims 1 to 4, wherein a length of at least the part of the first ranging signal is equal to a length of the original ranging signal.

**6.** The method according to any one of claims 1 to 5, wherein at least the part of the first ranging signal is carried in a ranging radio frame.

**7.** The method according to any one of claims 1 to 6, wherein before the sending, by the communication apparatus, at least a part of the first ranging signal, the method further comprises:

receiving, by the communication apparatus, ranging configuration information, or sending, by the communication apparatus, ranging configuration information, wherein

the ranging configuration information is used to configure one or more pieces of the following information: whether a ranging signal sent in a ranging process supports the integrity protection function, a format of a ranging radio frame that carries the ranging signal, a length of the ranging signal in the ranging process, and a pulse repetition frequency mode.

**8.** A method for transmitting a ranging signal in an ultra-wideband, comprising:

sending, by a communication apparatus, a signal, wherein the signal is used to generate a first ranging signal;
receiving, by a communication apparatus, a signal used for ranging, wherein the signal used for ranging is obtained after at least a part of the first ranging signal is transmitted through a radio channel, and at least the part of the first ranging signal supports an integrity protection function and a ranging function;
inputting, by the communication apparatus, an original ranging signal and the signal used for ranging into a correlator to perform a correlation operation, to obtain a first moment of a maximum value output by the correlator, wherein the original ranging signal is generated based on a first sequence;
performing, by the communication apparatus, integrity check on the signal used for ranging, to obtain a check result, wherein
when a correlation operation result obtained by performing a correlation operation on a second sequence and a check sequence is greater than or equal to a preset threshold, the check result is that the integrity check on the signal used for ranging succeeds; or when a correlation operation result obtained by performing a correlation operation on the second sequence and the check sequence is less than the preset threshold, the check result is that the integrity check on the signal used for ranging fails, wherein the second sequence is the first sequence, or the second sequence is a sequence obtained after time reversal processing is performed on the first sequence; and the check sequence is obtained by performing equal-interval sampling after a real part of the signal used for ranging is obtained, a start moment of the equal-interval sampling is the first moment, and a length of the check sequence is equal to a length of the first sequence; and
if the check result is that the integrity check on the signal used for ranging succeeds, determining, by the communication apparatus, the first moment as a moment of arrival of the signal used for ranging.

9. The method according to claim 8, wherein the signal comprises pilot information, and the second sequence is the same as the first sequence.

10. The method according to claim 8, wherein the signal is the original ranging signal, and the second sequence is the sequence obtained after time reversal processing is performed on the first sequence.

11. The method according to any one of claims 8 to 10, wherein that the check sequence is obtained by performing equal-interval sampling after a real part of the signal used for ranging is obtained comprises:
the check sequence is generated based on a polarity of a sample sequence, and the sample sequence is obtained after equal-interval sampling is performed after the real part of the signal used for ranging is obtained.

12. The method according to any one of claims 8 to 11, wherein at least the part of the first ranging signal is carried in a ranging radio frame.

13. The method according to any one of claims 8 to 12, wherein before the receiving, by the communication apparatus, a signal used for ranging, the method further comprises:

sending, by the communication apparatus, ranging configuration information, or receiving, by the communication apparatus, ranging configuration information, wherein
the ranging configuration information is used to configure one or more pieces of the following information: whether a ranging signal sent in a ranging process supports the integrity protection function, a format of a ranging radio frame that carries the ranging signal, a length of the ranging signal sent in the ranging process, and a pulse repetition frequency mode.

14. A method for communicating ranging configuration information, comprising:

sending, by a communication apparatus, ranging configuration information, or receiving, by the communication apparatus, ranging configuration information, wherein
the ranging configuration information comprises a type of a ranging radio frame, and the type of the ranging radio frame is a radio frame type supporting a ranging function, or a radio frame type supporting both the ranging function and an integrity protection function.

15. The method according to claim 14, wherein the ranging configuration information further comprises one or more pieces of the following: a format of the ranging radio frame, a length of a signal supporting the ranging function and/or the integrity protection function, and a pulse repetition frequency mode.

16. The method according to claim 14 or 15, wherein the ranging configuration information is carried in a ranging channel and preamble selection information element or a ranging reply time negotiation information element.

17. A communication apparatus, comprising:

a transceiver module, configured to receive a first signal; and
a processing module, configured to preprocess the first signal to obtain a second signal, wherein the preprocessing comprises channel estimation or power normalization, wherein
the processing module is further configured to generate a first ranging signal based on at least the second signal, wherein the first ranging signal meets a signal obtained after convolution processing is performed on an original ranging signal and a signal obtained after time reversal is or time reversal and conjugation processing are performed on the second signal, or the first ranging signal meets a signal obtained after time reversal is or time reversal and conjugation processing are performed on the second signal; and
the transceiver module is further configured to send at least a part of the first ranging signal, wherein at least the part of the first ranging signal supports an integrity protection function and a ranging function.

18. The communication apparatus according to claim 17, wherein the first signal comprises pilot information, the preprocessing comprises channel estimation, and the second signal is a first channel impulse response from a communication apparatus to the communication apparatus; and

the processing module is specifically configured to: obtain a second channel impulse response after performing first processing on the first channel impulse response, wherein the first processing comprises time reversal or time reversal and conjugation processing; and perform convolution processing based on the second channel impulse response and the original ranging signal.

19. The communication apparatus according to claim 18, wherein the processing module is specifically configured to perform convolution processing on the original ranging signal and a response obtained after normalization processing is performed on the second channel impulse response.

20. The communication apparatus according to claim 17, wherein the first signal is obtained after the original ranging signal is transmitted through a radio channel, and the preprocessing comprises power normalization; and

the processing module is specifically configured to obtain the first ranging signal after performing time reversal or time reversal and conjugation processing on the second signal.

21. The communication apparatus according to any one of claims 17 to 20, wherein a length of at least the part of the first ranging signal is equal to a length of the original ranging signal.

22. The communication apparatus according to any one of claims 17 to 21, wherein at least the part of the first ranging signal is carried in a ranging radio frame.

23. The communication apparatus according to any one of claims 17 to 22, wherein the transceiver module is further configured to receive ranging configuration information, or send ranging configuration information, wherein

the ranging configuration information is used to configure one or more pieces of the following information: whether a ranging signal sent in a ranging process supports the integrity protection function, a format of a ranging radio frame that carries the ranging signal, a length of the ranging signal in the ranging process, and a pulse repetition frequency mode.

24. A communication apparatus, comprising:

a transceiver module, configured to send a signal, wherein the signal is used to generate a first ranging signal, wherein

the transceiver module is further configured to receive a signal used for ranging, wherein the signal used for ranging is obtained after at least a part of the first ranging signal is transmitted through a radio channel, and at least the part of the first ranging signal supports an integrity protection function and a ranging function;

a correlation operation module, configured to input an original ranging signal and the signal used for ranging into a correlator to perform a correlation operation, to obtain a first moment of a maximum value output by the correlator, wherein the original ranging signal is generated based on a first sequence;

an integrity check module, configured to perform integrity check on the signal used for ranging, to obtain a check result, wherein

when a correlation operation result obtained by performing a correlation operation on a second sequence and a check sequence is greater than or equal to a preset threshold, the check result is that the integrity check on the signal used for ranging succeeds; or when a correlation operation result obtained by performing a correlation operation on the second sequence and the check sequence is less than the preset threshold, the check result is that the integrity check on the signal used for ranging fails, wherein the second sequence is the first sequence, or the second sequence is a sequence obtained after time reversal processing is performed on the first sequence; and the check sequence is obtained by performing equal-interval sampling after a real part of the signal used for ranging is obtained, a start moment of the equal-interval sampling is the first moment, and a length of the check sequence is equal to a length of the first sequence; and

a determining module, configured to: when the check result is that the integrity check on the signal used for ranging succeeds, determine the first moment as a moment of arrival of the signal used for ranging.

25. The communication apparatus according to claim 24, wherein the signal comprises pilot information, and the second sequence is the same as the first sequence.

26. The communication apparatus according to claim 24, wherein the signal is the original ranging signal, and the second sequence is the sequence obtained after time reversal processing is performed on the first sequence.

27. The communication apparatus according to any one of claims 24 to 26, wherein that the check sequence is obtained by performing equal-interval sampling after a real part of the signal used for ranging is obtained comprises:
the check sequence is generated based on a polarity of a sample sequence, and the sample sequence is obtained after equal-interval sampling is performed after the real part of the signal used for ranging is obtained.

28. The communication apparatus according to any one of claims 24 to 27, wherein at least the part of the first ranging signal is carried in a ranging radio frame.

29. The communication apparatus according to any one of claims 24 to 28, wherein the transceiver module is further configured to send ranging configuration information, or receive ranging configuration information, wherein
the ranging configuration information is used to configure one or more pieces of the following information: whether a ranging signal sent in a ranging process supports the integrity protection function, a format of a ranging radio frame that carries the ranging signal, a length of the ranging signal sent in the ranging process, and a pulse repetition frequency mode.

30. A communication apparatus, comprising:

a transceiver module, configured to send ranging configuration information, or receive ranging configuration information, wherein
the ranging configuration information comprises a type of a ranging radio frame, and the type of the ranging radio frame is a radio frame type supporting a ranging function, or a radio frame type supporting both the ranging function and an integrity protection function.

31. The communication apparatus according to claim 30, wherein the ranging configuration information further comprises one or more pieces of the following: a format of the ranging radio frame, a length of a signal supporting the ranging function and/or the integrity protection function, and a pulse repetition frequency mode.

32. The communication apparatus according to claim 30 or 31, wherein the ranging configuration information is carried in a ranging channel and preamble selection information element or a ranging reply time negotiation information element.

33. A communication apparatus, comprising a processor and a transceiver, wherein the transceiver is configured to send or receive a signal, and the processor is configured to execute program instructions, to enable the communication apparatus to perform the method according to any one of claims 1 to 13.

34. A communication apparatus, comprising a processor and a transceiver, wherein the transceiver is configured to send or receive information, and the processor is configured to execute program instructions, to enable the communication apparatus to perform the method according to any one of claims 14 to 16.

35. A computer-readable storage medium, wherein the computer-readable storage medium stores a computer program, the computer program comprises program instructions, and when the program instructions are executed by a computer, the computer is enabled to perform the method according to any one of claims 1 to 13.

36. A computer-readable storage medium, wherein the computer-readable storage medium stores a computer program, the computer program comprises program instructions, and when the program instructions are executed by a computer, the computer is enabled to perform the method according to any one of claims 14 to 16.

37. A computer program product, wherein when the computer program product runs on a computer, the computer is enabled to perform the method according to any one of claims 1 to 13.

38. A computer program product, wherein when the computer program product runs on a computer, the computer is enabled to perform the method according to any one of claims 14 to 16.

FIG. 1

FIG. 2

```
┌──────────┐                                                    ┌──────────┐
│  First   │                                                    │  Second  │
│  device  │                                                    │  device  │
└──────────┘                                                    └──────────┘
     │                                                                │
     │◄──────── S1: Send a third signal, where the third signal is ───│
     │          used to generate a first ranging signal               │
     │                                                                │
┌────┴──────────────────────────────────────────────────┐           │
│ S2: Receive a first signal                             │           │
└────┬──────────────────────────────────────────────────┘           │
     │                                                                │
┌────┴──────────────────────────────────────────────────┐           │
│ S3: Preprocess the first signal to obtain a second     │           │
│ signal, where the preprocessing includes channel       │           │
│ estimation or power normalization                      │           │
└────┬──────────────────────────────────────────────────┘           │
     │                                                                │
┌────┴──────────────────────────────────────────────────┐           │
│ S4: Generate the first ranging signal based on at least│           │
│ the second signal, where the first ranging signal meets│           │
│ a signal obtained after convolution processing is      │           │
│ performed on the second signal and the original ranging│           │
│ signal after time reversal is or time reversal and     │           │
│ conjugation processing are performed on the second     │           │
│ signal, or the first ranging signal meets a signal     │           │
│ obtained after time reversal is or time reversal and   │           │
│ conjugation processing are performed on the second     │           │
│ signal                                                 │           │
└────┬──────────────────────────────────────────────────┘           │
     │                                                                │
     │──────── S5: Send at least a part of the first ranging ────────►│
     │         signal, where at least the part of the first ranging   │
     │         signal supports an integrity protection function       │
     │         and a ranging function                                 │
     │                                                      ┌─────────┴──────────────────────┐
     │                                                      │ S6: Receive a signal used for  │
     │                                                      │ ranging, where the signal used │
     │                                                      │ for ranging is obtained after  │
     │                                                      │ at least the part of the first │
     │                                                      │ ranging signal is transmitted  │
     │                                                      │ through a radio channel        │
     │                                                      └─────────┬──────────────────────┘
     │                                                      ┌─────────┴──────────────────────┐
     │                                                      │ S7: Input the original ranging │
     │                                                      │ signal and the signal used for │
     │                                                      │ ranging into a correlator to   │
     │                                                      │ perform a correlation          │
     │                                                      │ operation, to obtain a first   │
     │                                                      │ moment at which a maximum value│
     │                                                      │ output by the correlator is    │
     │                                                      │ located                        │
     │                                                      └─────────┬──────────────────────┘
     │                                                      ┌─────────┴──────────────────────┐
     │                                                      │ S8: Perform integrity check on │
     │                                                      │ the signal used for ranging, to│
     │                                                      │ obtain a check result          │
     │                                                      └─────────┬──────────────────────┘
     │                                                      ┌─────────┴──────────────────────┐
     │                                                      │ S9: If the check result is that│
     │                                                      │ the integrity check on the     │
     │                                                      │ signal used for ranging        │
     │                                                      │ succeeds, determine the first  │
     │                                                      │ moment as a moment of arrival  │
     │                                                      │ of the signal used for ranging │
     │                                                      └─────────┬──────────────────────┘
     │                                                                │
```

FIG. 3

```
┌──────────┐                                          ┌──────────┐
│  First   │                                          │ Second   │
│  device  │                                          │ device   │
└────┬─────┘                                          └────┬─────┘
     │  S101: Send a channel measurement signal,          │
     │  where the channel measurement signal includes     │
     │                pilot information                    │
     │◄───────────────────────────────────────────────────│
```

S102: Perform channel estimation by using the channel measurement signal, to obtain a first channel impulse response from the second device to the first device

S103: Perform first processing on the first channel impulse response to obtain a second channel impulse response, where the first processing includes time reversal processing or time reversal processing and conjugation processing

S104: Generate a first ranging signal based on the second channel impulse response and an original ranging signal, where the first ranging signal is obtained after convolution processing is performed on the second channel impulse response and the original ranging signal

S105: Send at least a part of the first ranging signal, where at least the part of the first ranging signal supports an integrity protection function and a ranging function

S106: Receive a signal used for ranging, where the signal used for ranging is obtained after at least the part of the first ranging signal is transmitted through a radio channel

S107: Input the original ranging signal and the signal used for ranging into a correlator to perform a correlation operation, to obtain a first moment at which a maximum value output by the correlator is located

S108: Perform integrity check on the signal used for ranging, to obtain a check result

S109: If the check result is that the integrity check on the signal used for ranging succeeds, determine the first moment as a moment of arrival of the signal used for ranging

FIG. 4

FIG. 5a

Attack success rate: attack success rate

Preamble attack with integrity protection: preamble attack with integrity protection

STS attack without integrity protection: STS attack without integrity protection

STS attack with integrity protection: STS attack with integrity protection

Both STS and preamble attack with integrity protection: both STS and preamble attack with integrity protection

FIG. 5b

Ranging error rate: ranging error rate

Preamble attack with integrity protection: preamble attack with integrity protection

STS attack without integrity protection: STS attack without integrity protection

STS attack with integrity protection: STS attack with integrity protection

Both STS and preamble attack with integrity protection: both STS and preamble attack with integrity protection

Ranging error detection rate: ranging error detection rate
With integrity protection: with integrity protection
Without integrity protection: without integrity protection

FIG. 5c

FIG. 6

First
device

Second
device

S301: Generate a ranging radio frame, where the
ranging radio frame carries a signal supporting an
integrity protection function and a ranging function

S302: Send the ranging radio frame

S303: Receive the ranging radio frame

S304: Parse the ranging radio frame

FIG. 7

| SYNC Synchronization | SFD Start-of-frame delimiter | STS+ Signal supporting an integrity protection function and a ranging function | PHR Physical layer header | PHY payload Physical layer payload |
|---|---|---|---|---|

8a

| SYNC Synchronization | SFD Start-of-frame delimiter | PHR Physical layer header | PHY payload Physical layer payload | STS+ Signal supporting an integrity protection function and a ranging function |
|---|---|---|---|---|

8b

| SYNC Synchronization | SFD Start-of-frame delimiter | STS+ Signal supporting an integrity protection function and a ranging function |
|---|---|---|

8c

FIG. 8

| | SYNC<br>Synchronization | SFD<br>Start-of-frame<br>delimiter | STS+<br>Signal supporting an integrity protection<br>function and a ranging function |
|---|---|---|---|

STS+<br>format 1

| Gap<br>Gap | STS+ segment 1<br>STS+ segment 1 | Gap<br>Gap | STS+ segment 2<br>STS+ segment 2 | ... | STS+ segment N<br>STS+ segment N | Gap<br>Gap |
|---|---|---|---|---|---|---|

|← L1 →| |← L1 →| |← L1 →|

STS+<br>format 2

| Gap<br>Gap | STS+ segment 1<br>STS+ segment 1 | Gap<br>Gap | STS+ segment 2<br>STS+ segment 2 | ... | STS+ segment N<br>STS+ segment N | Gap<br>Gap |
|---|---|---|---|---|---|---|

|← L1+L2−1 →| |← L1+L2−1 →| |← L1+L2−1 →|

FIG. 9

| Communication apparatus | | Another communication apparatus |
|---|---|---|

S401: Send ranging configuration information, where the ranging configuration information includes a type of a ranging radio frame, and the type of the ranging radio frame is a radio frame type supporting a ranging function, or a radio frame type supporting both the ranging function and an integrity protection function

FIG. 10

| Transceiver module | 11 |
|---|---|
| Processing module | 12 |

Communication apparatus 1

FIG. 11

| Transceiver module | 21 | Determining module | 24 |
|---|---|---|---|
| Correlation operation module | 22 | Integrity check module | 23 |

Communication apparatus 2

FIG. 12

Communication apparatus 1000

1001

1003

Processor

Instructions

Memory

Instructions

Transceiver

1002

Control
circuit

Antenna

FIG. 13

## INTERNATIONAL SEARCH REPORT

| International application No. |
| --- |
| **PCT/CN2022/143865** |

| A. | CLASSIFICATION OF SUBJECT MATTER |
| --- | --- |
| | H04W4/029(2018.01)i |

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT, IEEE: 超宽带, 安全, 参考, 信号, 序列, 测距, 大于, 定位, 时间反转, 共轭, 卷积, 检验, 距离, 门限, 阈值, 完整, 保护, 校验, 相关, 运算, 小于, 信道估计, 归一化, 验证, UWB, ultra wideband, security, integrality, relative, reference, signal, sequence, check, STS, diatance, threshold, reverse, conjugate, cumulocirrus, correlation, estimate, attribution

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112141169 A (BYD CO., LTD.) 29 December 2020 (2020-12-29) description, paragraphs [0025]-[0098], and figures 1-6 | 1-7, 14-23, 30-38 |
| Y | CN 112141169 A (BYD CO., LTD.) 29 December 2020 (2020-12-29) description, paragraphs [0025]-[0098], and figures 1-6 | 8-13, 24-29, 33-38 |
| Y | CN 110535546 A (XI'AN JIAOTONG UNIVERSITY) 03 December 2019 (2019-12-03) description, paragraphs [0041]-[0079] | 8-13, 24-29, 33-38 |
| A | CN 106664119 A (DECAWAVE LTD.) 10 May 2017 (2017-05-10) description, paragraph [0025], and figure 1 | 1-38 |
| A | CN 101631306 A (ZTE CORP.) 20 January 2010 (2010-01-20) entire document | 1-38 |
| A | CN 112995081 A (HUAWEI TECHNOLOGIES CO., LTD.) 18 June 2021 (2021-06-18) entire document | 1-38 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 March 2023** | **16 March 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/143865** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2017123045 A1 (INDUSTRIAL BANK OF KOREA) 04 May 2017 (2017-05-04)<br>    entire document | 1-38 |

Form PCT/ISA/210 (second sheet) (July 2022)

<div align="center">

**INTERNATIONAL SEARCH REPORT**
**Information on patent family members**

</div>

International application No.

**PCT/CN2022/143865**

| Patent document cited in search report | | | Publication date (day/month/year) | Patent family member(s) | | | Publication date (day/month/year) |
|---|---|---|---|---|---|---|---|
| CN | 112141169 | A | 29 December 2020 | CN | 112141169 | B | 15 March 2022 |
| CN | 110535546 | A | 03 December 2019 | CN | 110535546 | B | 27 October 2020 |
| CN | 106664119 | A | 10 May 2017 | WO | 2015176776 | A1 | 26 November 2015 |
| | | | | EP | 3146641 | A1 | 29 March 2017 |
| | | | | EP | 3146641 | B1 | 24 February 2021 |
| | | | | KR | 20170009986 | A | 25 January 2017 |
| | | | | KR | 102193947 | B1 | 23 December 2020 |
| | | | | EP | 3840236 | A1 | 23 June 2021 |
| | | | | US | 2017085293 | A1 | 23 March 2017 |
| | | | | US | 10075210 | B2 | 28 July 2018 |
| | | | | CN | 106664119 | B | 28 July 2020 |
| | | | | CN | 112051541 | A | 08 December 2020 |
| | | | | CN | 112051541 | B | 03 November 2021 |
| | | | | US | RE48832 | E | 23 November 2021 |
| CN | 101631306 | A | 20 January 2010 | | None | | |
| CN | 112995081 | A | 18 June 2021 | WO | 2021115217 | A1 | 17 June 2021 |
| | | | | US | 2022299629 | A1 | 22 September 2022 |
| US | 2017123045 | A1 | 04 May 2017 | | None | | |

Form PCT/ISA/210 (patent family annex) (July 2022)

**REFERENCES CITED IN THE DESCRIPTION**

**Patent documents cited in the description**

- CN 202210045268